# EUROPEAN PATENT APPLICATION

(11) **EP 4 845 196 A1**
(43) Date of publication of application: **25.11.2026**
(21) Application number: 24917664.5
(22) Date of filing: 16.01.2024
(51) Int. Cl.: H04W 16/28

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN)
(74) Representative: Taor, Simon Edward William
(86) International application number: PCT/CN2024/072577
(87) International publication number: WO 2025/152037

(57) **Abstract**

Provided are a wireless communication method, a terminal device, and a network device. The method comprises: a terminal device receives measurement configuration information sent by a network device, wherein the measurement configuration information comprises frequency point identification information used for indicating a first frequency point, and configuration information used for indicating a configuration associated with the first frequency point, and the configuration information is related to a beam measurement result prediction behavior of the terminal device. The present application can save the overhead of a beam measurement process of the terminal device because measurement results for some beams are obtained by the terminal device by means of a beam measurement result prediction process. In addition, in one implementation, the present application can also save the overhead of measurement reference signal sending by the network device because the network device actually may not send a measurement reference signal associated with a predicted beam when the terminal device can perform the beam measurement result prediction process.

## Description

### TECHNICAL FIELD

The present disclosure relates to the technical field of communications, and more particularly to, a method for wireless communication, a terminal device, and a network device.

### BACKGROUND

A cell handover procedure is implemented based on a measurement procedure. In the related art, a network device and a terminal device need to consume a large amount of resources to complete the measurement task. This is because the measurement procedure is implemented based on the measurement of a measurement reference signal. That is to say, the network device needs to send the measurement reference signal by using a large amount of resources, and the terminal device needs to receive the measurement reference signal by using a large amount of resources, so as to complete the measurement of the measurement reference signal. Therefore, such a measurement manner, although workable, is not green and efficient enough.

### SUMMARY

The present disclosure provides a method for wireless communication, a terminal device, and a network device. Hereinafter, various aspects related to the present disclosure are described in detail.

In a first aspect, there is provided a method for wireless communication. The method includes a following operation. A terminal device receives measurement configuration information sent by a network device. The measurement configuration information includes: frequency point identifier information indicating a first frequency point; and configuration information indicating a configuration associated with the first frequency point. The configuration information is associated with a beam measurement result prediction behavior of the terminal device.

In a second aspect, there is provided a method for wireless communication. The method includes a following operation. A network device sends measurement configuration information to a terminal device. The measurement configuration information includes: frequency point identifier information indicating a first frequency point; and configuration information indicating a configuration associated with the first frequency point. The configuration information is associated with a beam measurement result prediction behavior of the terminal device.

In a third aspect, there is provided a terminal device including a receiving unit. The receiving unit is configured to receive measurement configuration information sent by a network device. The measurement configuration information includes: frequency point identifier information indicating a first frequency point; and configuration information indicating a configuration associated with the first frequency point. The configuration information is associated with a beam measurement result prediction behavior of the terminal device.

In a fourth aspect, there is provided a network device including a sending unit. The sending unit is configured to send measurement configuration information to a terminal device. The measurement configuration information includes: frequency point identifier information indicating a first frequency point; and configuration information indicating a configuration associated with the first frequency point. The configuration information is associated with a beam measurement result prediction behavior of the terminal device.

In a fifth aspect, there is provided a terminal device including a processor and a memory. The memory is configured to store one or more computer programs. The processor is configured to invoke the computer programs in the memory, to enable the terminal device to perform some of or all operations of the method in the first aspect.

In a sixth aspect, there is provided a network device including a processor, a memory and a transceiver. The memory is configured to store one or more computer programs. The processor is configured to invoke the computer programs in the memory, to enable the network device to perform some of or all operations of the method in the second aspect.

In a seventh aspect, an embodiment of the present disclosure provides a communication system. The system includes the aforementioned terminal device and/or the network device. In another possible design, the system may further include other devices that interact with the terminal device or the network device in the solutions provided by the embodiments of the present disclosure.

In an eighth aspect, an embodiment of the present disclosure provides a computer-readable storage medium. The computer-readable storage medium stores a computer program that causes a terminal device and/or a network device to perform some of or all operations of the method in each of the aforementioned aspects.

In a ninth aspect, an embodiment of the present disclosure provides a computer program product. The computer program product includes a non-transitory computer-readable storage medium storing a computer program. The computer program is operable to cause a terminal device and/or a network device to perform some of or all operations of the method in each of the aforementioned aspects. In some implementations, the computer program product may be a software installation package.

In a tenth aspect, an embodiment of the present disclosure provides a chip including a memory and a processor. The processor invokes and executes a computer program from the memory, to implement some of or all operations of the method in each of the aforementioned aspects.

Overhead of the beam measurement procedure by the terminal device can be saved through the present disclosure, because measurement results of some beams are obtained by the terminal device through the beam measurement result prediction procedure. In addition, in an implementation, overhead for sending the measurement reference signal by the network device can also be saved through the present disclosure, because the network device may not actually send the measurement reference signal associated with the predicted beam if the terminal device performs the beam measurement result prediction procedure.

### BRIEF DESCRIPTION OF THE DRAWINGS

FIG. 1 is an example diagram of a wireless communication system to which an embodiment of the present disclosure is applied.
FIG. 2 is a schematic flowchart of a method for wireless communication according to an embodiment of the present disclosure.
FIG. 3 is a schematic structural diagram of a terminal device according to an embodiment of the present disclosure.
FIG. 4 is a schematic structural diagram of a network device according to an embodiment of the present disclosure.
FIG. 5 is a schematic structural diagram of a device for communication according to an embodiment of the present disclosure.

### DETAILED DESCRIPTION

Hereinafter, technical solutions in the present disclosure are described with reference to the accompanying drawings.

### Communication system

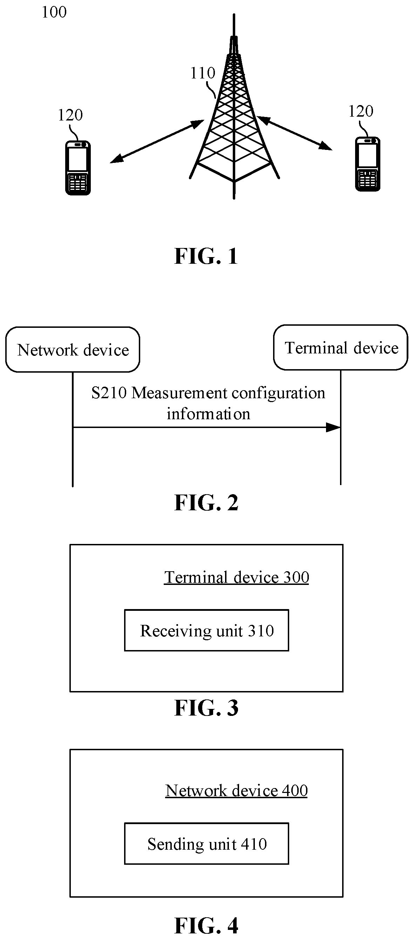

FIG. 1 illustrates a wireless communication system 100 to which the embodiments of the present disclosure are applied. The wireless communication system 100 may include communication devices. The communication devices may include a network device 110 and a terminal device 120. The network device 110 may be a device that communicates with the terminal device 120.

FIG. 1 exemplarily illustrates one network device and two terminals. Optionally, the wireless communication system 100 may include multiple network devices, and another number of terminal devices may be included in the coverage of each network device, which is not limited in the embodiments of the present disclosure.

Optionally, the wireless communication system 100 may also include other network entities, such as, network controllers, mobility management entities, etc., which are not limited by the embodiments of the present disclosure.

It is to be understood that the technical solutions of the embodiments of the present disclosure may be applied to various communication systems, such as: a 5th Generation (5G) system or a New Radio (NR), a Long Term Evolution (LTE) system, an LTE Frequency Division Duplex (FDD) system, an LTE Time Division Duplex (TDD), etc. The technical solutions provided by the present disclosure may also be applied to future communication systems, such as, a 6th generation mobile communication system, a satellite communication system, etc.

The terminal device in the embodiments of the present disclosure may also be referred to as User Equipment (UE), an access terminal, a user unit, a user station, a mobile platform, a Mobile Station (MS), a Mobile Terminal (MT), a remote station, a remote terminal, a mobile device, a user terminal, a terminal, a wireless communication device, a user agent or a user device, etc. The terminal device in the embodiments of the present disclosure may be a device that provides voice and/or data connectivity to a user, and may be used to connect people, objects and machines, such as a handheld device with wireless connection function, a vehicle-mounted device, etc. The terminal device in the embodiments of the present disclosure may be a mobile phone, a Pad, a notebook computer, a palmtop computer, a Mobile Internet Device (MID), a wearable device, a Virtual Reality (VR) device, a Augmented Reality (AR) device, a wireless terminal in industrial control, a wireless terminal in self driving, a wireless terminal in remote medical surgery, a wireless terminal in smart grid, a wireless terminal in transportation safety, a wireless terminal in smart city, or a wireless terminal in smart home, etc. Optionally, the UE may be used to act as a base station. For example, the UE may act as a scheduling entity that provides sidelink signal(s) between UEs in the Vehicle to Everything (V2X), the Device to Device (D2D) or the like. For example, a cellular phone communicates with a car by using the sidelink signal(s). The cellular phone communicates with the device in smart home without relaying communication signal(s) by the base station.

The network device in the embodiments of the present disclosure may be a device that communicates with the terminal device. The network device may also include an access network device. The access network device may provide communication coverage for a specific geographic region and may communicate with a terminal device 120 in the coverage. The access network device may also be referred to as a radio access network device, a base station, or the like. The access network device in the embodiments of the present disclosure may refer to a Radio Access Network (RAN) node (or device) that accesses a terminal device to a wireless network. The access network device may broadly cover or be replaced with following names, such as, Node B (NodeB), evolved NodeB (eNB), next generation NodeB (gNB), relay station, access point, Transmitting and Receiving Point (TRP), Transmitting Point (TP), Master eNB (MeNB), Secondary eNB (SeNB), Multi-standard Radio (MSR) node, home base station, network controller, access node, wireless node, Access Point (AP), transmission node, transceiver node, Base Band Unit (BBU), Remote Radio Unit (RRU), Active Antenna Unit (AAU), Remote Radio Head (RRH), Central Unit (CU), Distributed Unit (DU), positioning node, etc. The base station may be a macro base station, a micro base station, a relay node, a donor node or a combination thereof. The base station may also be a communication module, a modem or a chip provided inside the device or apparatus. The base station may also be a mobile switching center and a device that undertakes a function of the base station in D2D communication, V2X communication, Machine-to-Machine (M2M) communication, a device in network side in a 6G network, a device that undertakes a function of the base station in a future communication system, etc. The base station may support networks with the same technology or different access technologies. The specific technology and the specific device form adopted by the access network device are not limited in the embodiments of the present disclosure.

The base station may be fixed or mobile. For example, a helicopter or unmanned aerial vehicle may be configured to act as a mobile base station, and one or more cells may be moved according to the location of the mobile base station. In other examples, the helicopter or unmanned aerial vehicle may be configured to function as a device that communicates with another network device.

The communication device involved in the wireless communication system may include not only the access network device and a terminal device, but also a core network element. The core network element may be implemented by a device, i.e., the core network element is the core network device. It is to be understood that the core network device may also be a network device.

The core network element in the embodiments of the present disclosure may include a network element that processes and forwards signalling and data of a user. For example, the core network device may include a Core Access and Mobility Management Function (AMF), a Session Management Function (SMF), a user plane gateway, a Location Management Function (LMF), and other core network devices. The user plane gateway may be a server having functions such as mobility management, routing, and forwarding of user plane data. The user plane gateway is generally located at the network side, such as, a Serving Gateway (SGW), a Packet Data Network Gateway (PGW), a User Plane Function (UPF), or the like. Of course, the core network may also include other network elements, which are not listed herein.

In some deployments, the network device in the embodiments of the present disclosure may be a CU or a DU, or the network device may include a CU and a DU. The gNB may also include an AAU.

The network device and the terminal device may be deployed on land, and include indoor or outdoor device, hand-held device, or vehicle-mounted device. The network device and the terminal device may also be deployed on the water. The network device and the terminal device may also be deployed in airplanes, in balloons and in satellites in the air. The scenario where the network device and the terminal device are located is not limited in the embodiment of the present disclosure.

It is also to be understood that all or part of the functions of the communication device in the present disclosure may also be implemented by software functions running on the hardware or by virtualized functions instantiated on a platform (e.g., a cloud platform).

### Artificial Intelligence (AI)

In recent years, researches on the AI have achieved significant results in many fields. In particular, as an important research direction of the AI technology, Machine Learning (ML) has successfully solved a series of previously difficult problems by utilizing the nonlinear processing power of neural networks. The AI technology even shows stronger performance than human in the fields of image recognition, speech processing, natural language processing, games, etc. Therefore, the AI technology has received increasing attention.

In view of the tremendous success of the AI technology in the fields, such as, the computer vision and natural language processing. In the communication field, attempts have been made to use the AI technology to solve technical problems that are difficult to be solved by using the traditional communication methods. For example, the AI technology may be applied to various other aspects, such as, modeling or learning of a complex and unknown environment, channel prediction, intelligent signal generation and processing, network state tracking and intelligent scheduling, network optimization deployment. The AI technology is expected to promote the evolution of communication paradigm and reformation of the network architecture in the future, and is of great significance and value to the research on the 6G and subsequent technologies.

### Cell handover

In the mobile communication system, the serving cell of the terminal device may change. For example, the serving cell of the terminal device may change with the movement of the terminal device. The procedure of changing the serving cell may be referred to as the cell handover.

In order to assist the network device in sensing the movement state of the terminal device in time, the network device may configure a Measurement Object (MO) for the terminal device in advance. When a measurement result reporting event associated with the measurement object is met, the terminal device sends measurement results of one or more cells to the network device. Based on the measurement results reported by the terminal device and in combination with additional information obtained locally (such as, a load state of each neighbouring cell), the network device selects one or more neighbouring cells and initiates a handover request. After receiving the acknowledgement feedback, the current serving cell of the terminal device may forward the handover command (included in the acknowledgement feedback information) generated by the target handover cell to the terminal device. After the terminal device successfully receives the handover command generated by the target cell, the terminal device may initiate a connection setup procedure to the target cell, and the successful connection setup means the completion of the whole handover procedure.

Some communication systems, such as NR systems, adopt a beam-based network architecture. Therefore, the measurement result may include a beam-level measurement result (abbreviated as a beam measurement result) and a cell-level measurement result (abbreviated as a cell measurement result). According to the configuration of the network device, the terminal device may process the beam measurement results of one or more beams associated with the cell, to obtain the cell measurement result of the cell.

The network device and the terminal device need to consume a large amount of resources to complete the measurement task. This is because the measurement result is implemented based on the measurement of the measurement reference signal. That is to say, the network device needs to send the measurement reference signal by using a large amount of resources, and the terminal device needs to receive the measurement reference signal by using a large amount of resources, so as to complete the measurement of the measurement reference signal. Therefore, such the measurement manner, although workable, is not green and efficient enough.

FIG. 2 illustrates a method for wireless communication according to an embodiment of the present disclosure, to solve the aforementioned problem. The method illustrated in FIG. 2 may be performed by a terminal device and a network device. The method shown in FIG. 2 may include operation S210.

In operation S210, the network device sends measurement configuration information to the terminal device.

The measurement configuration information may be used for the network device to configure measurement-related information. For example, the measurement configuration information may include frequency point identifier information and configuration information. The frequency point identifier information may be used for indicating the first frequency point. The configuration information may be used for indicating a configuration associated with the first frequency point.

The configuration information may be associated with the beam measurement result prediction behavior of the terminal device. For example, the configuration information may be used for controlling, indicating, or configuring the beam measurement result prediction behavior of the terminal device.

The beam measurement result prediction behavior may include: the terminal device obtains, through a prediction or inference procedure, information related to the beam measurement result. The information related to the beam measurement result may include one or more of: a prediction result of a beam measurement result, or a cell-level measurement result of a cell associated with the predicted beam measurement result. In a case where a small number of measurement reference signals are sent between the terminal device and the network device, the terminal device may also obtain, through the prediction, information related to the beam measurement result.

Therefore, on the one hand, the overhead of the beam measurement procedure by the terminal device can be saved through the present disclosure, because the measurement results of some beams are obtained by the terminal device through the beam measurement result prediction procedure. On the other hand, the overhead for sending the measurement reference signal by the network device can be saved through the present disclosure, because the network device may not actually send the measurement reference signal associated with the predicted beam if the terminal device performs the beam measurement result prediction procedure.

It is to be noted that the measurement result may include one or more of: a Reference Signal Received Power (RSRP), a Reference Signal Received Quality (RSRQ), or a Signal to Interference Plus Noise Ratio (SINR).

In some embodiments, the beam measurement result prediction behavior may be implemented through a first model. The first model may include, for example, an AI model. The AI model may include, for example, an ML model, a neural network model, a deep learning model, or the like. Based on the AI model, the combination of the AI technology and beam measurement procedure can be implemented, thereby reducing some resource overhead.

Some or all of the measurement configuration information may be carried in the configuration information of the MO (abbreviated as the MO measurement configuration). The MO measurement configuration may include any configuration information related to the MO. For example, in the related art, some parameters in the MO measurement configuration may be used for carrying some or all of the measurement configuration information. For another example, one or more parameters may be added into the MO measurement configuration to carry some or all of the measurement configuration information. Exemplarily, a parameter (abbreviated as a frequency point identifier information parameter), defined in the related art, for indicating a frequency point identifier associated with the MO measurement configuration may be used for indicating frequency point identifier information in the measurement configuration information proposed by the embodiments of the present disclosure.

In some embodiments, the configuration information may be used for indicating one or more of: cell list information, beam identifier range information associated with the measurement reference signal, or whether the terminal device is allowed to perform the beam measurement result prediction behavior on the first cell.

The cell list information may be used for indicating a beam range for the terminal device to perform the beam measurement result prediction behavior at the first frequency point. For a cell within the cell range, the terminal device is able to perform the beam measurement result prediction behavior. That is to say, for the cell within the cell range, the terminal device may further obtain the cell-level measurement result of the cell through the beam measurement result obtained by the prediction procedure. For a cell outside the cell range, the terminal device may not perform the beam measurement result prediction behavior. That is to say, for the cell outside the cell range, the terminal device is unable to or cannot further obtain the cell-level measurement result of the cell through the beam measurement result obtained by the prediction, or the terminal device may further obtain the cell-level measurement result of the cell through the beam measurement result obtained by only the actual measurement procedure.

Accordingly, based on the cell list information indicated by the network device, the terminal device may determine to perform the beam measurement result prediction behavior for which cell or cells.

It is to be noted that the cell list information may be indicated through the Physical Cell Identity (PCI) information associated with the cell. In this case, the cell list information may also be referred to as PCI list information.

The beam identifier range information associated with the measurement reference signal may be used for indicating a beam range, associated with the measurement reference signal, for the terminal device to perform the beam measurement result prediction behavior at the first frequency point. For a beam within the beam range, the terminal device is able to perform the beam measurement result prediction behavior. That is to say, for the beam within the beam range, the terminal device may obtain a beam measurement result corresponding to the beam through the prediction procedure. For a beam outside the beam range, the terminal device may not perform the beam measurement result prediction behavior. In other words, for the beam outside the beam range, the terminal device is unable or cannot obtain the beam measurement result corresponding to the beam through the prediction procedure, or the terminal device may obtain, through only the actual measurement procedure, the beam measurement result corresponding to the beam outside the beam range.

The measurement reference signal may include one or more of: a Synchronization Signal Block (SSB), or a Channel State Information Reference Signal (CSI-RS). In a case where the measurement reference signal includes the SSB, the beam identifier range information associated with the measurement reference signal may be referred to as SSB-associated beam identifier range information. In a case where the measurement reference signal includes the CSI-RS, the beam identifier range information associated with the measurement reference signal may be referred to as CSI-RS-associated beam identifier range information.

Accordingly, based on the beam identifier range information associated with the measurement reference signal that is indicated by the network device, the network device may determine for which beam or beams the beam measurement result prediction behavior may be performed.

In some embodiments, whether the terminal device is allowed to perform the beam measurement result prediction behavior at the first frequency point may be separately indicated through a specific parameter. For example, a value of the specific parameter is 0, which is used for indicating that the terminal device is not allowed to perform the beam measurement result prediction behavior at the first frequency point; or the value of the specific parameter is 1, which is used for indicating that the terminal device is allowed to perform the beam measurement result prediction behavior at the first frequency point. For another example, the value of the specific parameter is 1, which is used for indicating that the terminal device is not allowed to perform the beam measurement result prediction behavior at the first frequency point; or the value of the specific parameter is 0, which is used for indicating that the terminal device is allowed to perform the beam measurement result prediction behavior at the first frequency point. In this implementation, it may be considered that the indication information of whether the terminal device is allowed to perform the beam measurement result prediction behavior at the first frequency point is configured according to a frequency point granularity, and such implementation is more flexible in configuration. In other embodiments, the indication information of whether the terminal device is allowed to perform the beam measurement result prediction behavior is configured according to the terminal device granularity. That is to say, all measurement frequency points configured by the network device are associated with the same indication information, then, the terminal device is allowed to perform the beam measurement result prediction behavior at all measurement frequency points configured by the network, or the terminal device is not allowed to perform the beam measurement result prediction behavior at each measurement frequency point configured by the network. Such implementation is simpler at the implementation level. The configuration granularity of the aforementioned indication information is not limited in the present disclosure.

In some embodiments, whether the terminal device is allowed to perform the beam measurement result prediction behavior at the first frequency point may be based on whether the first frequency point is associated with the cell list information and/or the beam identifier range information associated with the measurement reference signal. For example, if the first frequency point is associated with the cell list information and/or the beam identifier range information associated with the measurement reference signal, then, the terminal device is allowed to perform the beam measurement result prediction behavior at the first frequency point. For example, if the first frequency point is not associated with the cell list information and/or the beam identifier range information associated with the measurement reference signal, then, the terminal device is not allowed to perform the beam measurement result prediction behavior at the first frequency point.

It is to be noted that the cell list information being associated with the first frequency point may include: the MO-related measurement configuration associated with the first frequency point includes a newly defined parameter carrying the cell list information. The beam identifier range information associated with the measurement reference signal is associated with the first frequency point, which may include: the MO-related measurement configuration associated with the first frequency point includes a newly defined parameter carrying the beam identifier range information associated with the measurement reference signal.

Hereinafter, an example of an indication manner for the cell list information and/or the beam identifier range information associated with the measurement reference signal will be described.

In some embodiments, the measurement configuration information may include: information of a first cell and a first parameter associated with the information of the first cell. The first parameter may be used for indicating cell(s) included in the cell list information.

Optionally, the PCI of the first cell may be the first PCI. The information of the first cell may include the first PCI. In combination with the first frequency point and the first PCI, the terminal device may determine which cell at the first frequency point the first cell is.

The information of the first cell may belong to information of one or more cells related to the measurement configuration information. For example, in a case where the measurement configuration information is carried in the MO measurement configuration, the information of one or more cells may be indicated through a PCI list information parameter included in one MO measurement configuration. That is to say, the information of the first cell may be carried in the PCI list information parameter included in one MO measurement configuration.

The first parameter may be used for indicating whether the terminal device is allowed to perform the beam measurement prediction behavior on one or more cells. The one or more cells may include the first cell. The one or more cells may be one or more cells indicated by the PCI list information parameter included in the MO measurement configuration associated with the first frequency point.

It is to be understood that the first cell may be a cell on which the terminal device is allowed to perform the beam measurement behavior, or may be a cell on which the terminal device is not allowed to perform the beam measurement behavior. Whether the terminal device is allowed to perform the beam measurement behavior on the first cell may be determined according to the first parameter.

The first parameter may include one or more pieces of first indication information. The one or more pieces of first indication information may correspond to the one or more cells in one-to-one correspondence, so as to respectively indicate whether the terminal device is allowed to perform the beam measurement prediction behavior on the one or more cells. Exemplarily, the first indication information may be represented through 1 bit. That is to say, the one or more pieces of first indication information may be represented by one or more bits. The one or more bits may include a first bit, and the first bit may correspond to the first cell. For example, a value of the first bit is 1, which may indicate that the terminal device is allowed to perform the beam measurement behavior on the first cell; and/or, a value of the first bit is 0, which may indicate that the terminal device is not allowed to perform the beam measurement behavior on the first cell. For example, a value of the first bit is 0, which may indicate that the terminal device is allowed to perform the beam measurement behavior on the first cell; and/or, a value of the first bit is 1, which may indicate that the terminal device is not allowed to perform the beam measurement behavior on the first cell.

The first parameter may be a newly defined parameter. For example, the first parameter may be a newly defined parameter in the MO measurement configuration. Exemplarily, the first parameter may be the first indication information list parameter newly defined in the MO measurement configuration. The first indication information list parameter may include one or more pieces of first indication information. In the same MO configuration, each piece of the first indication information included in the first indication information list parameter is associated with one PCI at an element position in the configured PCI list information in the related art that is the same as the element position where the piece of the first indication information is located in the first indication information list parameter. The first indication information is used for indicating whether the terminal device is allowed to perform the beam measurement result prediction behavior on a cell corresponding to the associated PCI. This implementation is described below with reference to Table 1.

**Table 1**

| The measurement configuration information configured by the network device includes at least the following information: | | |
|---|---|---|
| MO1-related measurement configuration: | MO2-related measurement configuration: | MO3-related measurement configuration: |
| Frequency point identifier information included in MO1 measurement configuration: f1 | Frequency point identifier information included in MO2 measurement configuration: f2 | Frequency point identifier information included in MO3 measurement configuration: f3 |
| PCI list information included in the MO1 measurement configuration (a parameter in the related art): {PCI1, PCI2} | PCI list information included in the MO2 measurement configuration (a parameter in the related art): {PCI1, PCI4, PCI5, PCI8} | PCI list information included in the MO3 measurement configuration (a parameter in the related art): {PCI2, PCI3, PCI4} |
| First indication information list parameter (a newly defined parameter) included in the MO1 measurement configuration: {1, 0} | First indication information list parameter (a newly defined parameter) included in MO2 measurement configuration: {1, 0, 1, 0} | First indication information list parameter (a newly defined parameter) included in the MO3 measurement configuration: {1, 1, 0} |

Table 1 where the measurement configuration information configured by the network device includes three MO-related measurement configurations is taken as an example to describe. Each MO-related measurement configuration includes three parameters: the frequency point identifier information included in the MO measurement configuration, the PCI list information (the parameter defined in the related art) included in the MO measurement configuration, and a first indication information list parameter (a parameter newly defined in the present disclosure) included in the MO measurement configuration. The number of elements included in the first indication information list parameter included in any one MO measurement configuration is the same as the number of elements included in the PCI list information included in the same one MO related measurement configuration. The elements included in the first indication information list parameter included in any one MO measurement configuration are associated one by one, in an order of appearance of the elements, with the elements included in the PCI list information included in the same one MO related measurement configuration. That is to say, in the MO1-related measurement configuration, the value of the first indication information associated with PCI1 is '1', and the value of the first indication information associated with PCI2 is '0'; in the MO2-related measurement configuration, the value of the first indication information associated with PCI1 is '1', the value of the first indication information associated with PCI4 is '0', the value of the first indication information associated with PCI5 is '1', and the value of the first indication information associated with PCI8 is '0'; and in the MO3-related measurement configuration, the value of the first indication information associated with PCI2 is '1', the value of the first indication information associated with PCI3 is '1', and the value of the first indication information associated with PCI4 is '0'. The value of the first indication information is '1', which may indicate that the terminal device is allowed to perform the beam measurement result prediction behavior on the cell corresponding to the associated PCI; and the value of the first indication information is '0', which may indicate that the terminal device is not allowed to perform the beam measurement result prediction behavior on the cell corresponding to the associated PCI.

It is to be noted that three MOs referred to in Table 1 are merely examples. The MOs actually configured by the network device may be the same as or different from the MOs in Table 1. For example, the one or more MOs configured by the network device may include some or all of the three MOs in Table 1. For another example, the one or more MOs configured by the network device may include other MOs other than the MOs in Table 1. In addition, one MO measurement configuration may include other parameters other than the three parameters shown in Table 1, which is not limited in the present disclosure.

The number of bits included in the first parameter may be less. As described in the foregoing, the first indication information included in the first parameter may be represented by only one bit. Therefore, the overhead of the air interface configuration can be saved by indicating the cell(s) included in the cell list information through the first parameter.

In some embodiments, the cell(s) included in the cell list information are indicated through a second parameter. The second parameter may be used for indicating PCI information associated with one or more cells on which the terminal device is allowed to perform the beam measurement prediction behavior.

Optionally, the second parameter may include one or more pieces of PCI information. Any one piece of the one or more pieces of PCI information may be used for indicating that the terminal device is allowed to perform the beam measurement result prediction behavior on the corresponding cell. Based on this, the second parameter may therefore also be referred to as the PCI list information.

The second parameter may be a newly defined parameter. For example, the second parameter may be the PCI list information newly defined in the MO measurement configuration. Examples are described below through Table 2.

**Table 2**

| The measurement configuration information configured by the network device includes at least the following information: | | |
|---|---|---|
| MO1-related measurement configuration: | MO2-related measurement configuration: | MO3-related measurement configuration: |
| Frequency point identifier information included in MO1 measurement configuration: f1 | Frequency point identifier information included in MO2 measurement configuration: f2 | Frequency point identifier information included in MO3 measurement configuration: f3 |
| PCI list information included in the MO1 measurement configuration (a newly defined parameter): {PCI1, PCI2} | PCI list information included in the MO2 measurement configuration (a newly defined parameter): {PCI1, PCI4, PCI5, PCI8} | PCI list information included in the MO3 measurement configuration (a newly defined parameter): {PCI2, PCI3, PCI4} |

Table 2 where the measurement configuration information configured by the network device includes three MO-related measurement configurations is taken as an example to describe. Each MO-related measurement configuration includes two parameters: the frequency point identifier information included in the MO measurement configuration, and the PCI list information (a parameter newly introduced in the present disclosure) included in the MO measurement configuration. In the MO1-related measurement configuration, the terminal device is allowed to perform the beam measurement result prediction behavior on the cells corresponding to the PCI1 and the PCI2. In the MO2-related measurement configuration, the terminal device is allowed to perform the beam measurement result prediction behavior on the cells corresponding to the PCI1, PCI4, PCI5 and PCI8. In the MO3-related measurement configuration, the terminal device is allowed to perform the beam measurement result prediction behavior on the cells corresponding to the PCI2, PCI3, and PCI4.

It is to be noted that three MOs referred to in Table 2 are merely examples. The MOs actually configured by the network device may be the same as or different from the MOs in Table 2. For example, the one or more MOs configured by the network device may include some or all of the three MOs in Table 2. For another example, the one or more MOs configured by the network device may include other MOs other than the MOs in Table 2. In addition, one MO measurement configuration may include other parameters other than the two parameters shown in Table 2, which is not limited in the present disclosure.

The second parameter may not be associated with a parameter (e.g., PCI list information in the MO measurement configuration) already in the related art. That is to say, the association relationship between the newly introduced parameter and the parameter already defined in the related art may not be considered in the solution. Therefore, the solution is simple to be implemented and has greater flexibility.

In some embodiments, the second parameter may include a parameter already defined in the related art. That is to say, a parameter that has been defined already in the related art may be reused for indicating the PCI information associated with one or more cells on which the terminal device performs the beam measurement prediction behavior. For example, in a case where the terminal device is allowed to perform the beam measurement prediction behavior, the parameter that has been defined in the related art may be used for indicating the PCI information associated with one or more cells on which the terminal device performs the beam measurement prediction behavior. In a case where the terminal device is not allowed to perform the beam measurement prediction behavior, the information that may be indicated by the parameter that has been defined in the related art may be implemented in accordance with the definition in the related art. For another example, in the case where the terminal device is allowed to perform the beam measurement prediction behavior for the first frequency point, the parameter related to the first frequency point that has been defined in the related art may be used for indicating the PCI information associated with one or more cells on which the terminal device performs the beam measurement prediction behavior. In the case where the terminal device is not allowed to perform the beam measurement prediction behavior for the first frequency point, information that may be indicated by the parameter related to the first frequency point that has been defined in the related art may be implemented in accordance with the definition in the related art.

Optionally, the second parameter may include one or more of: a list cells to be added (cellsToAddModList), a list of black cells to be added (blackCellsToAddModList), or a list of white cells to be added (whiteCellsToAddModList). Taking the cellsToAddModList as an example, if one MO measurement configuration configured by the network device includes the parameter cellsToAddModList, the terminal device considers that a cell range for performing the beam measurement result prediction behavior at the frequency point associated with the MO measurement configuration is a cell range indicated by the parameter cellsToAddModList. The behavior of the terminal device when one MO-related measurement configuration configured by the network device includes the parameter whiteCellsToAddModList is similar to the behavior of the terminal device when the MO-related measurement configuration includes the parameter cellsToAddModList, which is not repeated herein.

It is to be noted that if the first frequency point is not associated with the cell list information proposed in the present disclosure (for example, the first parameter and the second parameter are not included in the MO-related measurement configuration), the terminal device may consider that: the cell range for performing the beam measurement result prediction behavior at the first frequency point is a cell corresponding to any one PCI that may be searched by the terminal device at the first frequency point (of course, if the network device configures the parameter associated with the related art, such as the cellsToAddModList, the cell range for performing the beam measurement result prediction behavior at the first frequency point is also constrained by the parameter associated with the related art); or, the network device does not allow the terminal device to perform the beam measurement result prediction behavior on any one cell at the first frequency point.

In some embodiments, the beam identifier range information associated with the measurement reference signal is indicated through a third parameter. The third parameter may be used for indicating beam identifiers associated with one or more measurement reference signals based on which the terminal device is allowed to perform the beam measurement result prediction behavior at the first frequency point.

It is to be understood that the third parameter may be associated with the first frequency point. Therefore, the beam identifier associated with the reference signal configured via the third parameter is based on a frequency point granularity. That is to say, the prediction range of the beam for the terminal device to perform the beam measurement result prediction behavior at the first frequency point may be given through the third parameter. Compared to other indications with smaller granularities (e.g., the PCI granularity), more configuration overhead can be saved through the configuration with the frequency point granularity.

The third parameter may be a newly defined parameter. For example, the third parameter may be a parameter newly defined in the MO measurement configuration. The measurement reference signal including an SSB is taken as an example. The third parameter may be SSB beam range information parameter that is newly defined in the MO measurement configuration. This newly defined SSB beam range information parameter may be referred to as an SSB prediction parameter (ssb-ToPredict) or an SSB inference parameter (ssb-ToInfer). The examples of the SSB beam range information parameter are illustrated below with reference to Table 3.

**Table 3**

| The measurement configuration information configured by the network device includes at least the following information: | | |
|---|---|---|
| MO1-related measurement configuration: | MO2-related measurement configuration: | MO3-related measurement configuration: |
| Frequency point identifier information included in MO1 measurement configuration: f1 | Frequency point identifier information included in MO2 measurement configuration: f2 | Frequency point identifier information included in MO3 measurement configuration: f3 |
| SSB beam range information included in the MO1 measurement configuration (a newly defined parameter) | SSB beam range information included in the MO2 measurement configuration (a newly defined parameter) | SSB beam range information included in the MO3 measurement configuration (a newly defined parameter) |

Table 3 where the measurement configuration information configured by the network device includes three MO-related measurement configurations is taken as an example to describe. Each MO-related measurement configuration includes two parameters: the frequency point identifier information included in the MO measurement configuration, and the SSB beam range information (a parameter newly defined in the present disclosure) included in the MO measurement configuration. In this implementation, the SSB beam range information included in the MO measurement configuration is directly associated with the frequency point identifier information included in the MO measurement configuration. That is to say, the SSB beam range information included in the MO measurement configuration is configured according to the frequency point granularity. The SSB prediction range for the terminal device to perform the beam measurement result prediction behavior at the frequency point associated with the MO configuration is given through the SSB beam range information included in the MO measurement configuration.

It is to be noted that three MOs referred to in Table 3 are merely examples. The MOs actually configured by the network device may be the same as or different from the MOs in Table 3. For example, the one or more MOs configured by the network device may include some or all of the three MOs in Table 3. For another example, the one or more MOs configured by the network device may include other MOs other than the MOs in Table 3. In addition, one MO measurement configuration may include other parameters other than the two parameters shown in Table 3, which is not limited in the present disclosure.

In some embodiments, the third parameter may include a parameter that has been already defined in the related art. For example, the third parameter may include an SSB measurement parameter (ssb-ToMeasure). That is to say, the range of the measurement reference signal for the terminal device to perform the beam measurement result prediction behavior at the first frequency point may be determined by the parameter ssb-ToMeasure.

Exemplarily, if the SSB beam set indicated by the parameter ssb-ToMeasure configured by the network device is A, and the SSB beam set for the terminal device to obtain, through the actual measurement procedure at the frequency point associated with the parameter ssb-ToMeasure, valid measurement results is B, then, at the frequency point, the SSB prediction range for the terminal device to perform the beam measurement result prediction behavior may be equal to a difference between the SSB beam set A and the SSB beam set B. For example, the SSB beam set A indicates an SSB beam 1, an SSB beam 2, an SSB beam 3, an SSB beam 4, an SSB beam 5, an SSB beam 6, an SSB beam 7, and an SSB beam 8; and the SSB beam set B for the terminal device to obtain, through the actual measurement procedure at the first frequency point, the valid measurement results includes: the SSB beam 1, the SSB beam 3, the SSB beam 5, and the SSB beam 7. In this case, at the first frequency point, the SSB prediction range for the terminal device to perform the beam measurement result prediction behavior may include: the SSB beam 2, the SSB beam 4, the SSB beam 6, and the SSB beam 8.

In the case where the configuration information is used for indicating the cell list information and the beam identifier range information associated with the measurement reference signal, the configuration information may be indicated through the first parameter and the third parameter, or the configuration parameter may be indicated through the second parameter and the third parameter.

For example, in a case where the first parameter or the second parameter is included in the MO measurement configuration, if the MO measurement configuration does not include the newly defined SSB beam range parameter, then, the terminal device may determine, according to the first parameter or the second parameter, a cell on which the terminal device is allowed to perform the beam measurement result prediction behavior, and determine, according to the parameter ssb-ToMeasure, an SSB beam prediction range for the terminal device to perform the beam measurement result prediction behavior at the frequency point associated with the MO measurement configuration.

For another example, in a case where the MO measurement configuration does not include the newly defined first indication information list parameter and the newly defined PCI list information parameter, and the MO measurement configuration includes the newly defined third parameter, the terminal device may determine, according to other parameters (for example, parameters that have been already defined in the related art) configured by the network device and the third parameter, a cell range for performing the beam measurement result prediction behavior at the frequency point associated with the SSB beam range information. If the aforementioned other parameters do not exist, the terminal device may consider that the cell range for performing the beam measurement result prediction behavior at the first frequency point is a cell corresponding to any one PCI that may be searched by the terminal device at the first frequency point. Herein, the other parameters may include one or more of: cellsToAddModList, blackCellsToAddModList, or whiteCellsToAddModList. Exemplarily, if one MO-related measurement configuration configured by the network device includes both the SSB beam range information parameter and the parameter cellsToAddModList that are newly defined in the present disclosure, the terminal device may consider that the cell range for performing the beam measurement result prediction behavior at the frequency point associated with the MO-related measurement configuration is the cell range indicated by the parameter cellsToAddModList. If the MO-related measurement configuration configured by the network device includes the SSB beam range information (the parameter newly introduced in the present disclosure) but the parameter cellsToAddModList does not exist or is not configured in the MO-related measurement configuration, the terminal device considers that the cell range for performing the beam measurement result prediction behavior at the frequency point associated with the MO-related measurement configuration is a cell corresponding to any one PCI that may be searched by the terminal device at the frequency point. The behavior of the terminal device when the parameter whiteCellsToAddModList exists or does not exist in the one MO-related measurement configuration configured by the network device is similar to the behavior of the terminal device when the parameter cellsToAddModList exists or does not exist in the MO-related measurement configuration, which is not repeated herein.

For another example, the technical solution where the configuration information is indicated through the first parameter and the third parameter may include: the MO measurement configuration includes the newly defined first indication information list parameter and the newly defined SSB beam range information parameter. The first indication information list parameter may include one or more pieces of first indication information. In the same MO configuration, each piece of the first indication information included in the first indication information list parameter is associated with one PCI at an element position in the configured PCI list information in the related art that is the same as the element position where the piece of the first indication information is located in the first indication information list parameter. the first indication information is used for indicating whether the terminal device is allowed to perform the beam measurement result prediction behavior on a cell corresponding to the associated PCI. The SSB beam range information parameter may be used for indicating the SSB prediction range for the terminal device to perform the beam measurement result prediction behavior at the frequency point associated with the MO configuration. Hereinafter, the technical solution will be described by way of example with reference to Table 4.

**Table 4**

| The measurement configuration information configured by the network device includes at least the following information: | | |
|---|---|---|
| MO1-related measurement configuration: | MO2-related measurement configuration: | MO3-related measurement configuration: |
| Frequency point identifier information included in MO1 measurement configuration: f1 | Frequency point identifier information included in MO2 measurement configuration: f2 | Frequency point identifier information included in MO3 measurement configuration: f3 |
| PCI list information included in the MO1 measurement configuration (a parameter in the related art): {PCI1, PCI2} | PCI list information included in the MO2 measurement configuration (a parameter in the related art): {PCI1, PCI4, PCI5, PCI8} | PCI list information included in the MO3 measurement configuration (a parameter in the related art): {PCI2, PCI3, PCI4} |
| First indication information list parameter (a newly defined parameter) included in the MO1 measurement configuration: {1, 0} | First indication information list parameter (a newly defined parameter) included in MO2 measurement configuration: {1, 0, 1, 0} | First indication information list parameter (a newly defined parameter) included in the MO3 measurement configuration: {1, 1, 0} |
| SSB beam range information included in the | SSB beam range information included in the | SSB beam range information included in the MO3 |
| MO1 measurement configuration (a newly defined parameter) | MO2 measurement configuration (a newly defined parameter) | measurement configuration (a newly defined parameter) |

In Table 4, the measurement configuration information configured by the network device includes three MO-related measurement configurations is taken as an example to describe. Each MO-related measurement configuration includes four parameters: the frequency point identifier information included in the MO measurement configuration, the PCI list information (the parameter that has been defined in the related art) included in the MO measurement configuration, a first indication information list parameter (a parameter newly defined in the present disclosure) included in the MO measurement configuration, and the SSB beam range information (a parameter newly defined in the present disclosure) included in the MO measurement configuration. The SSB beam range information included in the MO measurement configuration is directly associated with the frequency point identifier information included in the MO measurement configuration. That is to say, the SSB beam range information included in the MO measurement configuration is configured according to the frequency point granularity. The number of elements included in the first indication information list parameter included in any one MO measurement configuration is the same as the number of elements included in the PCI list information included in the same one MO-related measurement configuration. The elements included in the first indication information list parameter included in any one MO measurement configuration are associated one by one, in an order of appearance of the elements, with the elements included in the PCI list information included in the any one MO related measurement configuration. As shown in Table 4, in the MO1-related measurement configuration, the value of the first indication information associated with PCI1 is '1', and the value of the first indication information associated with PCI2 is '0'. In the MO2-related measurement configuration, the value of the first indication information associated with PCI1 is '1', the value of the first indication information associated with PCI4 is '0', the value of the first indication information associated with PCI5 is '1', and the value of the first indication information associated with PCI8 is '0'. In the MO3-related measurement configuration, the value of the first indication information associated with PCI2 is '1', the value of the first indication information associated with PCI3 is '1', and the value of the first indication information associated with PCI4 is '0'. The value of the first indication information being '1' indicates that the terminal device is allowed to perform the beam measurement result prediction behavior on the cell corresponding to the associated PCI, and the value of the first indication information being '0' indicates that the terminal device is not allowed to perform the beam measurement result prediction behavior on the cell corresponding to the associated PCI. Furthermore, the SSB prediction range for the terminal device to perform the beam measurement result prediction behavior at the frequency point associated with the MO configuration is given through the SSB beam range information included in the MO measurement configuration.

It is to be noted that three MOs referred to in Table 4 are merely examples. The MOs actually configured by the network device may be the same as or different from the MOs in Table 4. For example, the one or more MOs configured by the network device may include some or all of the three MOs in Table 4. For another example, the one or more MOs configured by the network device may include other MOs other than the MOs in Table 4. In addition, one MO measurement configuration may include other parameters other than the four parameters shown in Table 4, which is not limited in the present disclosure.

The technical solution where the measurement configuration information is indicated through the first parameter and the third parameter can save the air interface configuration overhead compared with defining the second parameter (for example, a new PCI list parameter). Because the number of bits occupied by one piece of first indication information in the first parameter is less than the number of bits occupied by one piece of PCI information. On the other hand, the range information of the measurement reference signal is configured according to the frequency point granularity, the configuration overhead can be saved compared configuring according to the PCI granularity.

For another example, the technical solution where the configuration information is indicated through the second parameter and the third parameter may include: the MO measurement configuration includes the newly defined PCI list parameter and the newly defined SSB beam range information parameter. The newly defined PCI list information parameter may include one or more pieces of PCI information. Any one piece of the PCI information included in the PCI list information parameter may be used for indicating that the terminal device is allowed to perform the beam measurement result prediction behavior on the corresponding cell. The SSB beam range information is used for indicating the SSB prediction range for the terminal device to perform the beam measurement result prediction behavior at the frequency point associated with the MO configuration. Hereinafter, the technical solution will be described by way of example with reference to Table 5.

**Table 5**

| The measurement configuration information configured by the network device includes at least the following information: | | |
|---|---|---|
| MO1-related measurement configuration: | MO2-related measurement configuration: | MO3-related measurement configuration: |
| Frequency point identifier information included in MO1 measurement configuration: f1 | Frequency point identifier information included in MO2 measurement configuration: f2 | Frequency point identifier information included in MO3 measurement configuration: f3 |
| PCI list information included in the MO1 measurement configuration (a newly defined parameter): {PCI1, PCI2} | PCI list information included in the MO2 measurement configuration (a newly defined parameter): {PCI1, PCI4, PCI5, PCI8} | PCI list information included in the MO3 measurement configuration (a newly defined parameter): {PCI2, PCI3, PCI4} |
| SSB beam range information included in the MO1 measurement configuration (a newly defined parameter) | SSB beam range information included in the MO2 measurement configuration (a newly defined parameter) | SSB beam range information included in the MO3 measurement configuration (a newly defined parameter) |

In Table 5, the measurement configuration information configured by the network device includes three MO-related measurement configurations is taken as an example to describe. Each MO-related measurement configuration includes three parameters: the frequency point identifier information included in the MO measurement configuration, the PCI list information (the parameter newly defined in the present disclosure) included in the MO measurement configuration, and the SSB beam range information (a parameter newly defined in the present disclosure) included in the MO measurement configuration. The SSB beam range information included in the MO measurement configuration is directly associated with the frequency point identifier information included in the MO measurement configuration. That is to say, the SSB beam range information included in the MO measurement configuration is configured according to the frequency point granularity. In the MO1-related measurement configuration, the terminal device is allowed to perform the beam measurement result prediction behavior on the cells corresponding to PCI1 and PCI2; and the SSB prediction range for the terminal device to perform the beam measurement result prediction behavior at the frequency point is given through the SSB beam range information included in the MO1 measurement configuration. In the MO2-related measurement configuration, the terminal device is allowed to perform the beam measurement result prediction behavior on the cells corresponding to PCI1, PCI4, PCI5 and PCI8; and the SSB prediction range for the terminal device to perform the beam measurement result prediction behavior at the frequency point is given through the SSB beam range information included in the MO2 measurement configuration. In the MO3-related measurement configuration, the terminal device is allowed to perform the beam measurement result prediction behavior on the cells corresponding to PCI2, PCI3 and PCI4; and the SSB prediction range for the terminal device to perform the beam measurement result prediction behavior at the frequency point is given through the SSB beam range information included in the MO3 measurement configuration.

It is to be noted that three MOs referred to in Table 5 are merely examples. The MOs actually configured by the network device may be the same as or different from the MOs in Table 5. For example, the one or more MOs configured by the network device may include some or all of the three MOs in Table 5. For another example, the one or more MOs configured by the network device may include other MOs other than the MOs in Table 5. In addition, one MO measurement configuration may include other parameters other than the three parameters shown in Table 5, which is not limited in the present disclosure.

In the technical solution where the measurement configuration information is indicated through the second parameter and the third parameter, the newly introduced parameter is not associated with the parameter PCI list information in the related art, and the solution has greater flexibility. This is because the association relationship between the newly introduced parameter and the parameter already defined in the related art is not considered, and the implementation is simple. On the other hand, the beam identifier range information associated with the measurement reference signal is configured according to the frequency point granularity, the configuration overhead can be saved compared with configuring according to the PCI granularity.

As described in the forgoing, in a case where the configuration information indicates the cell list information and the beam identifier range information associated with the measurement reference signal, the cell list information and the beam identifier range information associated with the measurement reference signal corresponding to the first frequency point may be indicated by two parameters (for example, the first parameter and the third parameter, or the second parameter and the third parameter), respectively, so that the indication of the cell list information can be decoupled from the indication of the beam identifier range information associated with the measurement reference signal, thereby simplifying the implementation. Moreover, in the embodiment, the beam identifier range information associated with the measurement reference signal may be configured according to the frequency point granularity, and the configuration overhead can be saved compared with the configuring according to the PCI granularity.

In some embodiments, the cell list information and the beam identifier range information associated with the measurement reference signal are indicated through the fourth parameter. The cell list information may be associated, through the fourth parameter, with the beam identifier range information associated with the measurement reference signal. In this case, the beam identifier range associated with the measurement reference signal indicated by the fourth parameter may be configured for the cell(s) included in the cell list, i.e., configured according to the cell granularity. The accuracy of the beam identifier range configured at the cell granularity is better than the accuracy of the beam identifier range configured at the frequency point granularity.

The fourth parameter may indicate both the cell list information and the beam identifier range information associated with the measurement reference signal. Therefore, the fourth parameter may also be referred to as a composite list information parameter.

In some implementations, the measurement configuration information may further include: information of a first cell and a fourth parameter associated with the information of the first cell. The fourth parameter is used for indicating: whether the terminal device is allowed to perform the beam measurement result prediction behavior on the first cell; and a beam range associated with a measurement reference signal for performing the beam measurement result prediction behavior for the first cell at the first frequency point. The descriptions of the first cell and the information of the first cell refer to the forgoing, which will not be repeated herein.

The fourth parameter is used for indicating whether the terminal device is allowed to perform the beam measurement result prediction behavior on the first cell, and in a case where the terminal device is allowed to perform the beam measurement result prediction behavior on the first cell, the fourth parameter may be used for indicating the beam range, associated with the measurement reference signal, for performing the beam measurement result prediction behavior for the first cell.

In a possible implementation, the fourth parameter may be a newly defined first composite list information parameter. The first composite list information parameter may include one or more elements. The measurement reference signal including the SSB is taken as an example, the one or more elements may include a first element. The first element may include one first indication information parameter (the description of the first indication information is detailed in the foregoing) and an SSB beam range information parameter. The first indication information included in each element included in the first composite list information parameter is associated with one PCI at a position in the PCI list information that is the same as the position where the first indication information is located in the first composite list information parameter, that has been defined in the related art, in the MO configuration associated with the first frequency point. The first indication information is used for indicating whether the terminal device is allowed to perform the beam measurement result prediction behavior on a cell corresponding to the associated PCI. In the same MO configuration, the SSB beam range information included in each element included in the first composite list information parameter may be associated with one PCI at an element position in the configured PCI list information already defined in the related art that is the same as the element position where the SSB beam range information is located in the first composite list information parameter. The SSB beam range information is used for indicating the SSB prediction range for the terminal device to perform the beam measurement result prediction behavior on the cell corresponding to the associated PCI. Examples are given below by Table 6.

**Table 6**

| The measurement configuration information configured by the network device includes at least the following information: | | |
|---|---|---|
| MO1-related measurement configuration: | MO2-related measurement configuration: | MO3-related measurement configuration: |
| Frequency point identifier information included in MO1 measurement configuration: f1 | Frequency point identifier information included in MO2 measurement configuration: f2 | Frequency point identifier information included in MO3 measurement configuration: f3 |
| PCI list information included in the MO1 measurement configuration (a parameter in the related art): {PCI1, PCI2} | PCI list information included in the MO2 measurement configuration (a parameter in the related art): {PCI1, PCI4, PCI5, PCI8} | PCI list information included in the MO3 measurement configuration (a parameter in the related art): {PCI2, PCI3, PCI4} |
| First composite list information (a newly defined parameter) included in the MO1 measurement configuration: {1, SSB beam range information 1}, {0, null} | First composite list information (a newly defined parameter) included in the MO2 measurement configuration: {1, SSB beam range information 2}, {0, null}, {1, SSB beam range information 3}, {0, null} | First composite list information (a newly defined parameter) included in the MO3 measurement configuration: {1, SSB beam range information 1}, {1, SSB beam range information 4}, {0, null} |

Table 6 where the measurement configuration information configured by the network device includes three MO-related measurement configurations is taken as an example to describe. Each MO-related measurement configuration includes three parameters: the frequency point identifier information included in the MO measurement configuration, the PCI list information (the parameter that has been defined in the related art) included in the MO measurement configuration, and the first composite list information parameter (a parameter newly defined in the present disclosure) included in the MO measurement configuration. The SSB beam range information included in the MO measurement configuration (or the SSB beam range information included in any one of the elements included in the first composite list information parameter) is directly associated with the PCI information, defined in the related art, included in the MO measurement configuration. That is to say, the SSB beam range information included in the MO measurement configuration is configured according to the PCI granularity, or is configured according to combined granularity (also referred to as the cell granularity) of the frequency point granularity and the PCI granularity. Taking the MO1-related measurement configuration as an example, in Table 6, the first composite list information parameter included in the MO1 measurement configuration includes two elements: an element 1 and an element 2. The element 1 includes one piece of first indication information (with a value of '1') and one piece of SSB beam range information (i.e., the SSB beam range information 1), and the element 1 is associated with the PCI1 included in the PCI list information included in the MO1 measurement configuration. The element 2 includes one piece of first indication information (with a value of '0') and one piece of SSB beam range information that is empty, and the element 2 is associated with the PCI2 included in the PCI list information contained in the MO1 measurement configuration. The value of the first indication information is '1', which indicates that the terminal device is allowed to perform the beam measurement result prediction behavior on the cell corresponding to the associated PCI; and the value of the first indication information is '0', which indicates that the terminal device is not allowed to perform the beam measurement result prediction behavior on the cell corresponding to the associated PCI.

It is to be noted that three MOs referred to in Table 6 are merely examples. The MOs actually configured by the network device may be the same as or different from the MOs in Table 6. For example, the one or more MOs configured by the network device may include some or all of the three MOs in Table 6. For another example, the one or more MOs configured by the network device may include other MOs other than the MOs in Table 6. In addition, one MO measurement configuration may include other parameters other than the three parameters shown in Table 6, which is not limited in the present disclosure.

Compared with defining a new PCI list parameter, the cell list information and the beam identifier range information associated with the measurement reference signal are indicated in the manner of combining the fourth parameter and the information of the first cell, which can save more air interface configuration overhead, this is because the number of bits occupied by one piece of first indication information is less than the number of bits occupied by one piece of PCI information. On the other hand, the SSB beam range information is configured according to the cell granularity, which enables the configuration accuracy of the SSB beam range information is better compared with configuring according to the frequency point granularity, and is beneficial to accurately predicting, according to the cell granularity, the beam measurement result corresponding to the beam associated with a specific cell.

In some implementations, the fourth parameter is used for indicating: PCI information of a second cell on which the terminal device is allowed to perform the beam measurement result prediction behavior; and a beam range, associated with a measurement reference signal, for performing the beam measurement result prediction behavior for the second cell at the first frequency point. The second cell may belong to one or more cells on which the terminal device is allowed to perform the beam measurement result prediction behavior. The fourth parameter is used for indicating: PCI information of the one or more cells; and a beam range, associated with a measurement reference signal, for respectively performing the beam measurement result prediction behavior for the one or more cells at the first frequency point.

It is to be noted that the second cell is a cell on which the terminal device is allowed to perform the beam measurement result prediction behavior at the first frequency point. As described in the foregoing, the first cell is any one cell associated with the first frequency point. Therefore, the second cell may be the first cell, but the first cell is not necessarily the second cell.

In a possible implementation, the fourth parameter may be a newly defined second composite list information parameter. The measurement reference signal including the SSB is taken as an example, the second composite list information parameter will be described. The second composite list information parameter may include one or more elements. The one or more elements may include a second element. The second element may include one piece of PCI information and one piece of SSB beam range information. The PCI information and the SSB beam range information may be associated with each other. The PCI information included in the second element is used for indicating that the terminal device is allowed to perform the beam measurement result prediction behavior on the corresponding cell. The SSB beam range information included in the second element is used for indicating the SSB beam prediction range for the terminal device to perform the beam measurement result prediction behavior on the PCI associated with the parameter. Examples are given below through Table 7.

**Table 7**

| The measurement configuration information configured by the network device includes at least the following information: | | |
|---|---|---|
| MO1-related measurement configuration: | MO2-related measurement configuration: | MO3-related measurement configuration: |
| Frequency point identifier information included in MO1 measurement configuration: f1 | Frequency point identifier information included in MO2 measurement configuration: f2 | Frequency point identifier information included in MO3 measurement configuration: f3 |
| Second composite list information (a newly defined parameter) included in the MO1 measurement configuration: {PCI1, SSB beam range information 1}, {PCI2, SSB beam range information 2} | Second composite list information (a newly defined parameter) included in the MO2 measurement configuration: {PCI1, SSB beam range information 3}, {PCI4, SSB beam range information 4}, {PCI5, SSB beam range information 5}, {PCI8, SSB beam range information 6} | Second composite list information (a newly defined parameter) included in the MO3 measurement configuration: {PCI2, SSB beam range information 7}, {PCI3, SSB beam range information 8}, {PCI4, SSB beam range information 9} |

In Table 7, the measurement configuration information configured by the network device includes three MO-related measurement configurations is taken as an example to describe. Each MO-related measurement configuration includes two parameters: the frequency point identifier information included in the MO measurement configuration, and the second composite list information (the parameter newly introduced in the present disclosure) included in the MO measurement configuration. The SSB beam range information included in the MO measurement configuration (or the SSB beam range information included in any one of the elements included in the second composite list information parameter) is directly associated with the newly defined PCI information included in the MO measurement configuration. That is to say, the SSB beam range information included in the MO measurement configuration is configured according to the frequency point granularity, or configured according to the combined granularity (also referred to as the cell granularity) of the frequency point granularity and the PCI granularity. Taking the MO1-related measurement configuration as an example, in Table 7, the second composite list information parameter included in the MO1 measurement configuration includes two elements: an element 1 and an element 2. The element 1 includes one PCI (with a value of PCI1) and one piece of SSB beam range information (i.e., the SSB beam range information 1), and the SSB beam range information 1 included in the element 1 is associated with the PCI1. The element 2 includes one PCI (with a value of PCI2) and one piece of SSB beam range information (i.e., the SSB beam range information 2), and the SSB beam range information 2 included in the element 2 is associated with the PCI2.

It is to be noted that three MOs referred to in Table 7 are merely examples. The MOs actually configured by the network device may be the same as or different from the MOs in Table 7. For example, the one or more MOs configured by the network device may include some or all of the three MOs in Table 7. For another example, the one or more MOs configured by the network device may include other MOs other than the MOs in Table 7. In addition, one MO measurement configuration may include other parameters other than the three parameters shown in Table 7, which is not limited in the present disclosure.

In the aforementioned implementation, the newly introduced fourth parameter is not associated with the PCI list information parameter that has been defined in the related art, and the solution has greater flexibility. This is because the association relationship between the newly introduced parameter and the parameter that has been already defined in the related art is not considered, and the implementation is simple. On the other hand, the beam identifier range information associated with the measurement reference signal is configured according to the cell granularity, which enables the configuration accuracy of the beam identifier range information associated with the measurement reference signal is better compared with configuring according to the frequency point granularity, and is beneficial to accurately predicting, according to the cell granularity, the beam measurement result corresponding to the beam associated with a specific cell.

It is to be noted that the measurement reference signal including the SSB is taken as an example to describe in the foregoing. Indeed, the aforementioned solution may also be applied to a case where the measurement reference signal includes another signal, e.g., the CSI-RS. For example, in a case where the measurement reference signal includes the SSB and the CSI-RS, the beam identifier range information associated with the measurement reference signal may be indicated through the fifth parameter and the sixth parameter, respectively. The fifth parameter may be used for indicating beam identifiers associated with one or more SSBs on which the terminal device is allowed to perform the beam measurement result prediction behavior at the first frequency point. The fifth parameter may be used for indicating beam identifiers associated with one or more CSI-RSs on which the terminal device is allowed to perform the beam measurement result prediction behavior at the first frequency point. For another example, in a case where the measurement reference signal includes the SSB and the CSI-RS, the beam identifier range information associated with the measurement reference signal may be indicated through the sixth parameter. The sixth parameter may be used for indicating beam identifiers associated with one or more SSBs or one or more CSI-RSs on which the terminal device is allowed to perform the beam measurement result prediction behavior at the first frequency point. For another example, in a case where the measurement reference signal includes the SSB and the CSI-RS, the cell(s) included in the cell list information, the beam identifier range information associated with the SSB, and the beam identifier range information associated with the CSI-RS may be indicated through the seventh parameter. For another example, in a case where the measurement reference signal includes the SSB and/or the CSI-RS, the cell(s) included in the cell list information and the beam identifier range information associated with the SSB may be indicated through the eighth parameter; and/or, the cell(s) included in the cell list information and the beam identifier range information associated with the CSI-RS may be indicated through the ninth parameter. The detailed implementations are similar, which are not further elaborated in the present disclosure.

In some embodiments, the beam measurement result prediction behavior may include predicting beam measurement result for a certain beam or predicting beam measurement results for some beams. For example, the terminal device may obtain a beam measurement result corresponding to a second beam set through prediction based on a beam measurement result corresponding to a first beam set obtained through an actual measurement procedure. The first beam set may include one or more beams. The second beam may include one or more beams. Both the beam measurement result corresponding to the first beam set and the beam measurement result corresponding to the second beam set may be associated with the second cell. As described in the foregoing, the second cell may be a cell on which the terminal device is allowed to perform the beam measurement result prediction behavior at the first frequency point.

It can be seen that for the cell on which the terminal device is allowed to perform the beam measurement result prediction behavior, the terminal device may predict the beam measurement result corresponding to the second beam set based on the beam measurement result corresponding to the first beam set obtained through the actual measurement procedure. Therefore, the beam measurement result corresponding to the second beam set may be obtained without the actual measurement procedure, thereby reducing the overhead for the terminal device to perform the actual measurement procedure. In addition, in some implementations, since the actual measurement procedure is not required, the transmission of the corresponding measurement reference signal may not be performed between the terminal device and the network device, thereby reducing the measurement resources occupied by the measurement reference signal.

In a possible implementation, the beam measurement result corresponding to the first beam set and the beam measurement result corresponding to the second beam set may belong to the beam measurement result at the same moment.

In some embodiments, the beam measurement result corresponding to the first beam set is beam measurement results corresponding to m beams associated with a first moment obtained by the terminal device through the actual measurement procedure. The beam measurement result corresponding to the second beam set may be beam measurement results corresponding to n beams associated with the first moment determined by the terminal device through beam measurement result prediction behavior. Both the beam measurement results corresponding to the m beams and the beam measurement results corresponding to the n beams may be associated with the second cell. Both m and n are positive integers.

For example, the terminal device may predict or inference, according to the beam measurement results corresponding to the m beams and identifiers of the m beams, the beam measurement results corresponding to the n beams and identifiers of the n beams at the first moment. For another example, the terminal device may predict or inference, according to the beam measurement results corresponding to the m beams, the beam measurement results corresponding to the n beams at the first moment. For another example, the terminal device may predict or inference, according to the beam measurement results corresponding to the m beams, the identifiers of the m beams and a beam pattern associated with the measurement reference signal, the beam measurement results corresponding to the n beams at the first moment. For another example, the terminal device may predict or inference, according to the beam measurement results corresponding to the m beams, the identifiers of the m beams, and the beam pattern associated with the measurement reference signal, the beam measurement results corresponding to the n beams and the identifiers of the n beams at the first moment. The beam pattern associated with the measurement reference signal is used for indicating an association relationship (e.g., a spatial association relationship) between the beams associated with the measurement reference signal, and the information may indicate an association relationship between the predicted beam and the actual measurable beam, and may assist in inference to obtain the beam measurement results corresponding to n beams at the first moment. Herein, the spatial association relationship may be used for indicating whether a spatial correlation exists between the beams. Exemplarily, if the spatial correlation exists between the m beams and the n beams, the beam measurement results corresponding to the n beams may be predicted in the manner of the interpolation based on the beam measurement results corresponding to the m beams. For example, it is assumed that the beam pattern associated with the measurement reference signal indicates that the spatial correlation exists between a beam 1, a beam 2, a beam 3, a beam 4, a beam 5 and a beam 6 in the numbering order, if the actual measurable beam set includes the beam 1, the beam 3 and the beam 5, then when the beam 2, the beam 4 and the beam 6 are predicted, it is possible to consider predicting the beam measurement results in the manner of the interpolation. For example, the beam measurement result corresponding to the beam 2 is obtained in the manner of the interpolation based on the beam measurement results corresponding to the beam 1 and the beam 3; the beam measurement result corresponding to the beam 4 is obtained in the manner of the interpolation based on the beam measurement results corresponding to the beam 3 and the beam 5; and the beam measurement result corresponding to the beam 6 is obtained in the manner of the interpolation based on the beam measurement results corresponding to the beam 4 and the beam 5.

It is to be noted that the first moment may be any one moment during the terminal device performing the beam measurement result prediction procedure.

In this implementation, the beam measurement result prediction procedure may be implemented according to the beam measurement result obtained by the actual measurement procedure at only a certain moment. Therefore, the beam measurement result prediction procedure in this manner has low complexity and is beneficial to the implementation of the terminal device.

In a possible implementation, the beam measurement result corresponding to the first beam set and the beam measurement result corresponding to the second beam set may belong to the beam measurement results at the different moments. For example, the beam measurement result corresponding to the first beam set may belong to the beam measurement result associated with a historical moment before the first moment (the beam measurement results corresponding to m beams obtained through the actual measurement procedure at the first moment may also belong to the beam measurement result corresponding to the first beam set), and the beam measurement result corresponding to the second beam set may belong to the beam measurement result associated with the first moment. In the beam measurement result prediction procedure in this manner, the beam measurement data, obtained by the terminal device measuring at several moments in history, may be considered, therefore, accuracy of the beam measurement result prediction is higher.

Optionally, the beam measurement result corresponding to the first beam set is beam measurement results corresponding to k beam sets, associated with k moments before the first moment, obtained by the terminal device through the actual measurement procedure. The beam measurement results corresponding to the n beams include the beam measurement result corresponding to the second beam set. Both k and n are positive integers. The beam measurement results corresponding to the k beam sets and the beam measurement results corresponding to the n beams are both associated with the second cell. For example, the terminal device may predict or inference, according to the beam measurement results corresponding to the k beam sets and identifiers of the k beam sets, the beam measurement results corresponding to the n beams and identifiers of the n beams at the first moment. For another example, the terminal device may predict or inference, according to the beam measurement results corresponding to the k beam sets, the beam measurement results corresponding to the n beams at the first moment. For another example, the terminal device may predict or inference, according to the beam measurement results corresponding to the k beam sets, the identifiers of the k beam sets and the beam pattern associated with the measurement reference signal, the beam measurement results corresponding to the n beams at the first moment. For another example, the terminal device may predict or inference, according to the beam measurement results corresponding to the k beam sets, the identifiers of the k beam sets, and the beam pattern associated with the measurement reference signal, the beam measurement results corresponding to the n beams and the identifiers of the n beams at the first moment. The beam pattern associated with the measurement reference signal is used for indicating an association relationship (e.g., a spatial association relationship) between the beams associated with the measurement reference signal, and the information may indicate an association relationship between the predicted beam and the actual measurable beam, and may assist in inference to obtain the beam measurement results corresponding to n beams at the first moment.

It is to be noted that the k beam sets may include one or more groups of beam sets, and one group of beam set may include one or more beams. The beam measurement results corresponding to one group of beam set may be beam measurement results corresponding to one or more beams obtained by the terminal device through the actual measurement procedure at the same moment.

It is to be noted that the k moments before the first moment may include the first moment. The terminal device may obtain, through the actual measurement procedure, the beam measurement results corresponding to the m beams associated with the first moment. The m beams may be any one of the k beam sets.

In some embodiments, the beam measurement result prediction behavior may include predicting cell-level measurement result associated with a certain cell or cell-level beam measurement results associated with some cells. That is to say, the terminal device may determine or predict the cell-level measurement result of the corresponding cell according to the beam measurement result obtained through the prediction. Exemplarily, the terminal device may determine a cell-level measurement result associated with the second cell at the first moment based on a beam measurement result corresponding to a third beam set and/or the beam measurement result corresponding to the second beam set. The beam measurement result corresponding to the second beam set belongs to beam measurement results corresponding to n beams associated with the second cell at the first moment obtained by the terminal device according to the prediction. The beam measurement result corresponding to the third beam set belongs to the beam measurement results, corresponding to the m beams associated with the second cell at the first moment, obtained by the terminal device through the actual measurement procedure.

It is to be noted that the third beam set may be the same as or different from the aforementioned first beam set.

For example, the first beam set is exactly the same as the third beam set. That is to say, the predicted beam measurement result of the beam associated with the second cell and the predicted cell-level measurement result of the second cell are obtained based on the same beam measurement result obtained through the actual measurement procedure. Exemplarily, the beam measurement result corresponding to the first beam set and the beam measurement result corresponding to the third beam set are both the beam measurement results, corresponding to one or more beams associated with the second cell at a first moment, obtained by the terminal device through the actual measurement procedure.

For another example, the first beam set is partially the same as the third beam set. That is to say, the predicted beam measurement result of the beam associated with the second cell and the predicted cell-level measurement result of the second cell are obtained based on the partially same beam measurement result obtained through the actual measurement procedure. Exemplarily, the third beam set may be a subset of the first beam set. Exemplarily, the beam measurement result corresponding to the first beam set includes the beam measurement result obtained by the actual measurement procedure before the first moment and the beam measurement result obtained by the actual measurement procedure at the first moment. Exemplarily, the first beam set has an intersection with the third beam set.

For another example, the first beam set is exactly different from the third beam set. Exemplarily, the beam measurement result corresponding to the first beam set may include beam measurement results corresponding to m1 beams among the m beams obtained by the actual measurement procedure at the first moment. The beam measurement result corresponding to the third beam set may belong to the beam measurement results corresponding to m2 beams among the m beams obtained by the actual measurement procedure at the first moment. Any one of the m1 beams is different from each of the m2 beams. Both m1 and m2 are positive integers.

In some embodiment, in a case where all of the beam measurement results corresponding to the m beams are less than a first threshold, the cell-level measurement result associated with the second cell at the first moment is determined based on a maximum value among the beam measurement results corresponding to the m beams. In other words, if any one of the m beam measurement results obtained by the terminal device on the second cell through the actual measurement procedure at the first moment is less than the first threshold, the terminal device may consider that the cell-level measurement result of the second cell at the first moment is equal to the beam measurement result corresponding to the beam with the largest measurement value of the m beam measurement results.

In some embodiment, the beam measurement result corresponding to the second beam set belongs to beam measurement results, corresponding to n beams associated with the second cell at the first moment, obtained by the terminal device through a prediction procedure, and in a case where one or more beam measurement results among the beam measurement results corresponding to the m beams are greater than or equal to the first threshold, the cell-level measurement result associated with the second cell at the first moment is determined based on a linear average of k1 beam measurement results. The beam measurement results corresponding to the k1 beams are all greater than or equal to the first threshold, and any one of the beam measurement results corresponding to the k1 beams belong to the beam measurement results corresponding to the m beams or the beam measurement results corresponding to the n beams, where m, n and k1 are all positive integers. That is to say, if a beam measurement result, corresponding to at least one beam among the m beam measurement results, obtained by the terminal device on the second cell at the first moment through the actual measurement procedure is greater than or equal to the first threshold, the terminal device may consider that the cell-level measurement result of the cell at the first moment is equal to the linear average of the beam measurement results corresponding to the k1 beams. The beam measurement result corresponding to any one beam included in the beam measurement results corresponding to the k1 beams is greater than or equal to the first threshold, and the beam measurement result corresponding to any one beam included in the beam measurement results corresponding to the k1 beams belongs to any one of the beam measurement results included in the m beam measurement results associated with the first moment obtained by the terminal device through the actual measurement procedure or belongs to any one of the beam measurement results included in the n beam measurement results associated with the first moment obtained by the terminal device through the beam result prediction procedure, where k1 is less than or equal to the first quantity threshold.

It is to be noted that the first threshold and/or the first quantity threshold may be configured by the network device. For example, the network device may send, to the terminal device, information of the first threshold and/or information of the first quantity threshold. The first threshold and/or the first quantity threshold may be used for determining a cell-level measurement result associated with the second cell. Exemplarily, the information of the first threshold and/or the information of the first quantity threshold may be configured to the terminal device by network device-specific signaling.

In an optional embodiment, a number of beam measurement results greater than or equal to the first threshold among the beam measurement results corresponding to the m beams is a first number, and a number of beam measurement results greater than or equal to the first threshold among the beam measurement results corresponding to the n beams is a second number. A sum (first number plus the second number) of the first number and the second number is a third number. The cell-level measurement result associated with the second cell at the first moment is associated with the third number.

For example, in a case where the third number is less than or equal to a first quantity threshold, the beam measurement results corresponding to the k1 beams include: beam measurement results greater than or equal to the first threshold in a total of the beam measurement results corresponding to the m beams and the beam measurement results corresponding to the n beams. That is to say, if the total number of beams, with beam measurement results meeting the preset condition among the m beam measurement results associated with the first moment obtained by the terminal device through the actual measurement procedure and the n beam measurement results associated with the first moment obtained by the terminal device through the beam result prediction procedure, is less than or equal to the first quantity threshold, the terminal device takes the linear average of the beam measurement results corresponding to the all beams with the beam measurement results meeting the preset condition among the m beam measurement results and the n beam measurement results as the cell-level measurement result corresponding to the second cell at the first moment. Herein, the prediction condition is that the beam measurement result is greater than or equal to the first threshold.

For another example, in a case where the third number is greater than a first quantity threshold, the beam measurement results corresponding to the k1 beams include: beam measurement results corresponding to first k2 best beams that are greater than or equal to the first threshold in a total of the beam measurement results corresponding to the m beams and the beam measurement results corresponding to the n beams, where k1 or k2 is equal to the first quantity threshold. That is to say, if the total number of beams, with beam measurement results meeting the preset condition among the m beam measurement results associated with the first moment obtained by the terminal device through the actual measurement procedure and the n beam measurement results associated with the first moment obtained by the terminal device through the beam measurement result prediction procedure, is greater than the first quantity threshold, the terminal device takes the linear average of the beam measurement results corresponding to the first k2 best beams whose beam measurement results meeting the preset condition among the m beam measurement results and the n beam measurement results as the cell-level measurement result of the second cell at the first moment. Herein, the value of k2 may be equal to the first quantity threshold, and the prediction condition is that the beam measurement result is greater than or equal to the first threshold.

Based on the aforementioned method, it is not necessary to distinguish the method for obtaining the cell-level measurement result through performing the beam measurement result prediction behavior from the method for obtaining the cell-level measurement result without performing the beam measurement result prediction behavior. That is to say, regardless of whether the terminal device performs the beam measurement result prediction behavior, the methods for obtaining the cell-level measurement results are consistent. Therefore, it is not necessary to define two different sets of methods for obtaining the cell-level measurement result for the terminal device depending on whether the terminal device is in the beam prediction scenario (one set is used in the non-beam prediction scenario and the other set is used in the beam prediction scenario), and the terminal device has low additional complexity when the non-beam prediction scenario is extended to the beam prediction scenario.

For another example, in a case where the third number is greater than a first quantity threshold, if a number of beams whose beam measurement results greater than or equal to the first threshold among the beam measurement results corresponding to the m beams is greater than or equal to the first quantity threshold, the beam measurement results corresponding to the k1 beams include: beam measurement results corresponding to first k1 best beams that are greater than or equal to the first threshold among the beam measurement results corresponding to the m beams. Herein, k1 is equal to the first quantity threshold. That is to say, if the number of beams with beam measurement results meeting the preset condition among the m beam measurement results associated with the first moment obtained by the terminal device through the actual measurement procedure is greater than or equal to the first quantity threshold, the terminal device takes the linear average of the beam measurement results, corresponding to the first first-quantity-threshold best beams with the beam measurement results greater than or equal to the first quantity threshold among the m beam measurement results, as the cell-level measurement result of the second cell at the first moment. Herein, the prediction condition is that the beam measurement result is greater than or equal to the first threshold.

For another example, in a case where the third number is greater than a first quantity threshold, if a number of beams with beam measurement results greater than or equal to the first threshold among the beam measurement results corresponding to the m beams is less than the first quantity threshold, the beam measurement results corresponding to the k1 beams include: all beam measurement results greater than or equal to the first threshold among the beam measurement results corresponding to the m beams, and beam measurement results corresponding to first k3 best beams that are greater than or equal to the first threshold among the beam measurement results corresponding to the n beams. Herein, k1 is equal to the first quantity threshold. That is to say, if the total number of beams with beam measurement results meeting the preset condition among the m beam measurement results associated with the first moment obtained by the terminal device through the actual measurement procedure and the n beam measurement results associated with the first moment obtained by the terminal device through the beam result prediction procedure is greater than the first quantity threshold, and the number of the beams with beam measurement results greater than or equal to the first threshold the beam measurement results corresponding to the m beams is less the first quantity threshold, the terminal device takes the linear average of the measurement results of all beams with the beam measurement results meeting the preset condition among the m beam measurement results, as well as the measurement results of the first k3 best beams with the beam measurement results meeting the preset condition among the n beam measurement results, for a total of k4 beams, as the cell-level measurement result of the second cell at the first moment. Herein, the value of k4 may be equal to the first quantity threshold, k3 is equal to (k4-k6), and k6 is the number of beams that meet the preset condition among the m beams. The preset condition may include that the beam measurement result is greater than or equal to the first threshold, and k6 is a positive integer.

In this manner, different methods for obtaining the cell-level measurement result are adopted in the beam prediction scenario and the non-beam prediction scenario. However, since the better beam obtained by the actual measurement of the terminal device is preferentially used for obtaining the cell-level measurement result, and the better beam obtained by the beam prediction procedure is considered secondly, the cell-level measurement result obtained in this manner is more accurate or more trustworthy than the cell-level measurement result obtained in the aforementioned manner.

In some embodiments, in a case where a cell-level measurement result associated with the second cell meets a measurement reporting event, the terminal device sends, to the network device, the cell-level measurement result associated with the second cell at a first moment. The cell-level measurement result associated with the second cell is determined by the beam measurement result prediction behavior. For example, the cell-level measurement result associated with the second cell may be a cell-level measurement result obtained after the terminal device performs the aforementioned beam measurement result prediction behavior.

In some embodiments, the measurement configuration information may include indication information. The indication information is used for indicating whether the terminal device reports, when the measurement reporting event is met, a predicted beam measurement result associated with the second cell at the first moment.

In some embodiments, the measurement configuration information may include a second quantity threshold and/or a first range. The second quantity threshold is used for indicating a maximum number of beams included in a predicted beam measurement result associated with the second cell at the first moment reported by the terminal device. The first range is used for indicating a beam identifier range to which beam(s) included in the predicted beam measurement result reported by the terminal device belong.

Optionally, if the measurement configuration information further includes the second quantity threshold, in a case where the measurement reporting event is met, a number of beams included in the predicted beam measurement result associated with the second cell at the first moment that is sent by the terminal device to the network device is less than or equal to the second quantity threshold.

Optionally, if the measurement configuration information further includes the first range, in a case where the measurement reporting event is met, beams included in the predicted beam measurement result associated with the second cell at the first moment that is sent by the terminal device to the network device belong to the first range.

For example, if the measurement configuration includes the indication information but does not include the second quantity threshold information and the first range, when the cell-level measurement result of the second cell acquired by the terminal device at the first moment meets the measurement reporting event indicated in the measurement configuration, the terminal device reports the predicted beam measurement results corresponding to all the beams predicted for the second cell at the first moment.

For another example, if the measurement configuration includes the indication information and the second quantity threshold information but does not include the first range, when the cell-level measurement result of the second cell acquired by the terminal device at the first moment meets the measurement reporting event indicated in the measurement configuration, the terminal device reports the predicted beam measurement results corresponding to the at most first k5 best beams predicted for the second cell at the first moment (the number of beams predicted for the second cell actually reported by the terminal device is less than or equal to the second quantity threshold). Herein, the value of k5 is equal to the value of the second quantity threshold.

For another example, if the measurement configuration includes the indication information and the first range but does not include the second quantity threshold information, when the cell-level measurement result of the second cell acquired by the terminal device at the first moment meets the measurement reporting event indicated in the measurement configuration, the terminal device reports the predicted beam measurement results, predicted for the second cell at the first moment, corresponding to the beams which belong to the beams included in the first range (the beam range, predicted for the second cell, actually reported by the terminal device belongs to a subset of the beams included in the first range).

For another example, if the measurement configuration includes the indication information, the second quantity threshold information, and the first range, when the cell-level measurement result of the second cell acquired by the terminal device at the first moment meets the measurement reporting event indicated in the measurement configuration, the terminal device reports the predicted beam measurement results, predicted for the second cell at the first moment, corresponding to the at most first k5 best beams which belong to the beams included in the first range (the beam range, predicted for the second cell, actually reported by the terminal device belongs to the subset of the beams included in the first range, and the number of beams, predicted for the second cell, actually reported by the terminal device is less than or equal to the second quantity threshold). Herein, the value of k5 is equal to the value of the second quantity threshold.

For another example, if the measurement configuration includes the second quantity threshold information but does not include the first range, when the cell-level measurement result of the second cell acquired by the terminal device at the first moment meets the measurement reporting event indicated in the measurement configuration, the terminal device reports the predicted beam measurement results, predicted for the second cell at the first moment, corresponding to the at most first k5 best beams (the number of beams, predicted for the second cell, actually reported by the terminal device is less than or equal to the second quantity threshold). Herein, the value of k5 is equal to the value of the second quantity threshold.

For another example, if the measurement configuration includes the first range but does not include the second quantity threshold information, when the cell-level measurement result of the second cell acquired by the terminal device at the first moment meets the measurement reporting event indicated in the measurement configuration, the terminal device reports the predicted beam measurement results, predicted for the second cell at the first moment, corresponding to the beams which belong to the beams included in the first range (the beam range, predicted for the second cell, actually reported by the terminal device belongs to a subset of the beams included in the first range).

For another example, if the measurement configuration includes the second quantity threshold information and the first range, when the cell-level measurement result of the second cell acquired by the terminal device at the first moment meets the measurement reporting event indicated in the measurement configuration, the terminal device reports the predicted beam measurement results, predicted for the second cell at the first moment, corresponding to the at most first k5 best beams which belong to the beams included in the first range (the beam range, predicted for the second cell, actually reported by the terminal device belongs to the subset of the beams included in the first range, and the number of beams, predicted for the second cell, actually reported by the terminal device is less than or equal to the second quantity threshold). Herein, the value of k5 is equal to the value of the second quantity threshold.

According to one or more of the second quantity threshold, the first range and the indication information that are configured by the network device, the terminal device may provide the predicted beam measurement results to the network device based on requirements, thereby facilitating the handover target cell to configure more accurate contention-free random access resources for the terminal device or assisting the network device in selecting the handover target cell.

The measurement reporting event is any one of: an A1 event, an A2 event, an A3 event, an A4 event, an A5 event, an A6 event, an A7 event, an A8 event, an A9 event, an A10 event, an A11 event, an A12 event, an A13 event, or an A14 event. It is to be emphasized that A1~ A14 are only used for logical numbering of the events and have no other meaning. The A1 event may include: a signal measurement result of the serving cell is higher than an absolute threshold. The A2 event may include: the signal measurement result of the serving cell is smaller than an absolute threshold. The A3 event may include: a signal measurement result of a neighbouring cell is one offset higher than a signal measurement result of a Primary Cell (PCell)/Primary Secondary Cell (PSCell). The A4 event may include: the signal measurement result of the neighbouring cell is higher than an absolute threshold. The A5 event may include: the signal measurement result of the PCell/PSCell cell is smaller than an absolute threshold 1 anda signal measurement result of a neighbouring cell/Secondary Cell (SCell) is higher than an absolute threshold 2. The A6 event may include: the signal measurement result of the neighbouring cell is one offset higher than the signal measurement result of the the SCell cell. The A7 event may include: a distance between the first device and a reference point 1 is greater than a configured threshold 1 and a distance between the first device and a reference point 2 is less than a configured threshold 2. The A8 event may include: the distance between the first device and the reference point 1 is greater than the configured threshold 1. The A9 event may include: the distance between the first device and the reference point 2 is less than the configured threshold 2. A10 events may include: a neighbouring cell measurement result belonging to the Inter Radio Access Technology (Inter RAT) is higher than an absolute threshold. The A11 event may include: signal measurement result of the PCell cell is smaller than an absolute threshold 1 and a neighbouring cell measurement result belonging to the Inter RAT is higher than an absolute threshold 2. The A12 event may include: a periodic measurement reporting timer T expires. The A13 event may include: the time reaches the absolute time X. The A14 event may include: a duration t starting from the successful reception of the measurement configuration has elapsed.

In some embodiments, the terminal device sends first capability information to the network device. The first capability information is used for indicating whether the terminal device supports a beam measurement result prediction function. That is to say, the first capability may indicate the beam measurement result prediction capability of the terminal device.

Optionally, the first capability information may be indicated according to the following granularities: a carrier granularity, a band granularity, a band combined granularity, the band granularity and the band combined granularity, the carrier granularity and the band granularity, the carrier granularity and the band combined granularity, the carrier granularity and the band granularity and the band combined granularity, the frequency range granularity, the band granularity and the frequency range granularity, the carrier granularity and the frequency range granularity, the carrier granularity and the band granularity and the frequency range granularity. In other words, the first capability information may indicate one of: a beam measurement result prediction capability of the terminal device on one or more carriers; a beam measurement result prediction capability of the terminal device on one or more bands; a beam measurement result prediction capability of the terminal device on one or more band combinations; a beam measurement result prediction capability of the terminal device on one or more bands associated with one or more band combinations; a beam measurement prediction capability of the terminal device on one or more carriers associated with one or more bands; a beam measurement result prediction capability of the terminal device on one or more carriers associated with one or more band combinations; a beam measurement result prediction capability of the terminal device on one or more carriers associated with one or more bands associated with one or more band combinations; a beam measurement result prediction capability of the terminal device on one or more frequency ranges; a beam measurement result prediction capability of the terminal device on one or more bands associated with one or more frequency ranges; a beam measurement prediction capability of the terminal device on one or more carriers associated with one or more frequency ranges; a beam measurement prediction capability of the terminal device on one or more carriers associated with one or more bands associated with one or more frequency ranges.

In some embodiments, the network device corresponding to the serving cell of the terminal device may send the first prediction result to the network device corresponding to the handover target cell. The first prediction result may include a predicted beam measurement result associated with the handover target cell.

Optionally, the first prediction result may be carried in a handover preparation message.

The predicted beam measurement result associated with the handover target cell may be from: a predicted beam measurement result obtained through the measurement reporting procedure by the terminal device and/or a predicted beam measurement result associated with a neighbouring cell acquired through a beam measurement result prediction procedure performed by a serving cell associated with the terminal device.

The method embodiments of the present disclosure are described in detail in the foregoing, and device embodiments of the present disclosure are described in detail below. It is to be understood that the method embodiments correspond to the device embodiments, and the portions not described in detail of the device embodiments may refer to the method embodiments.

FIG. 3 is a schematic structural diagram of a terminal device 300 according to an embodiment of the present disclosure. The terminal device 300 may include a receiving unit 310.

The receiving unit 310 is configured to receive measurement configuration information sent by a network device. The measurement configuration information includes: frequency point identifier information indicating a first frequency point; and configuration information indicating a configuration associated with the first frequency point. The configuration information is associated with a beam measurement result prediction behavior of the terminal device.

In some embodiments, the configuration information is used for indicating one or more of: cell list information indicating a cell range for the terminal device to perform the beam measurement result prediction behavior at the first frequency point; or beam identifier range information associated with a measurement reference signal. The beam identifier range information indicates a beam range, associated with the measurement reference signal, for the terminal device to perform the beam measurement result prediction behavior at the first frequency point.

In some embodiments, the measurement configuration information further includes: information of a first cell and a first parameter associated with the information of the first cell. Cell(s) included in the cell list information are indicated through the first parameter, and the first parameter is used for indicating whether the terminal device is allowed to perform the beam measurement result prediction behavior on the first cell.

In some embodiments, cell(s) included in the cell list information are indicated through a second parameter. The second parameter is used for indicating Physical Cell Identity (PCI) information associated with one or more cells on which the terminal device is allowed to perform the beam measurement prediction behavior.

In some embodiments, the beam identifier range information associated with the measurement reference signal is indicated through a third parameter. The third parameter is used for indicating beam identifiers associated with one or more measurement reference signals on which the terminal device is allowed to perform the beam measurement result prediction behavior at the first frequency point.

In some embodiments, cell(s) included in the cell list information and the beam identifier range information associated with the measurement reference signal are indicated through a fourth parameter.

In some embodiments, the measurement configuration information further includes information of a first cell and the fourth parameter associated with the information of the first cell. The fourth parameter being used for indicating: whether the terminal device is allowed to perform the beam measurement result prediction behavior on the first cell; and a beam range associated with a measurement reference signal for performing the beam measurement result prediction behavior for the first cell at the first frequency point.

In some embodiments, the fourth parameter is used for indicating: PCI information of a second cell on which the terminal device is allowed to perform the beam measurement result prediction behavior; and a beam range associated with a measurement reference signal for performing the beam measurement result prediction behavior for the second cell at the first frequency point.

In some embodiments, the terminal device 300 is further configured to obtain a beam measurement result corresponding to a second beam set through prediction based on a beam measurement result corresponding to a first beam set obtained through an actual measurement procedure. Both the beam measurement result corresponding to the first beam set and the beam measurement result corresponding to the second beam set are associated with a second cell on which the terminal device is allowed to perform the beam measurement result prediction behavior at the first frequency point.

In some embodiments, the beam measurement result corresponding to the first beam set is beam measurement results corresponding to m beams associated with a first moment obtained by the terminal device through the actual measurement procedure. The operation that the beam measurement result corresponding to the second beam set is obtained through the prediction based on a beam measurement result corresponding to the first beam set obtained through the actual measurement procedure includes: beam measurement results corresponding to n beams associated with the first moment and identifiers of the n beams through prediction are obtained based on the beam measurement results corresponding to the m beams and identifiers of the m beams. The beam measurement results corresponding to the n beams include the beam measurement result corresponding to the second beam set, and the beam measurement results corresponding to the m beams and the beam measurement results corresponding to the n beams are both associated with the second cell, where both m and n are positive integers.

In some embodiments, the beam measurement result corresponding to the first beam set is beam measurement results corresponding to k beam sets associated with k moments before a first moment obtained by the terminal device through the actual measurement procedure. The operation that the beam measurement result corresponding to the second beam set is obtained through the prediction based on a beam measurement result corresponding to the first beam set obtained through the actual measurement procedure includes: beam measurement results corresponding to n beams associated with the first moment and identifiers of the n beams through prediction are obtained based on the beam measurement results corresponding to the k beam sets and identifiers corresponding to the k beam sets. The beam measurement results corresponding to the n beams include the beam measurement results corresponding to the second beam set, the beam measurement results corresponding to the k beam sets and the beam measurement results corresponding to the n beams are both associated with the second cell, where both k and n are positive integers.

In some embodiments, the terminal device 300 is further configured to determine a cell-level measurement result associated with the second cell based on a beam measurement result corresponding to a third beam set and/or the beam measurement result corresponding to the second beam set. The beam measurement result corresponding to the third beam set belongs to beam measurement results corresponding to m beams associated with the second cell at a first moment obtained by the terminal device through the actual measurement procedure.

In some embodiments, in a case where all of the beam measurement results corresponding to the m beams are less than a first threshold, the cell-level measurement result associated with the second cell at the first moment is determined based on a maximum value among the beam measurement results corresponding to the m beams, where m is a positive integer.

In some embodiments, the beam measurement result corresponding to the second beam set belongs to beam measurement results corresponding to n beams associated with the second cell at the first moment obtained by the terminal device through a prediction procedure. In a case where one or more beam measurement results among the beam measurement results corresponding to the m beams are greater than or equal to a first threshold, the cell-level measurement result associated with the second cell at the first moment is determined based on a linear average of beam measurement results corresponding to k1 beams. The beam measurement results corresponding to the k1 beams are all greater than or equal to the first threshold, and any one of the beam measurement results corresponding to the k1 beams belong to the beam measurement results corresponding to the m beams or the beam measurement results corresponding to the n beams, where m, n and k1 are all positive integers.

In some embodiments, a number of beam measurement results greater than or equal to the first threshold among the beam measurement results corresponding to the m beams is a first number, and a number of beam measurement results greater than or equal to the first threshold among the beam measurement results corresponding to the n beams is a second number. A sum of the first number and the second number is a third number, and the cell-level measurement result associated with the second cell at the first moment is associated with the third number.

In some embodiments, in a case where the third number is less than or equal to a first quantity threshold, the beam measurement results corresponding to the k1 beams include: beam measurement results greater than or equal to the first threshold in a total of the beam measurement results corresponding to the m beams and the beam measurement results corresponding to the n beams.

In some embodiments, in a case where the third number is greater than a first quantity threshold, the beam measurement results corresponding to the k1 beams include: beam measurement results corresponding to first k2 best beams that are greater than or equal to the first threshold in a total of the beam measurement results corresponding to the m beams and the beam measurement results corresponding to the n beams, where k1 or k2 is equal to the first quantity threshold.

In some embodiments, in a case where the third number is greater than a first quantity threshold, the beam measurement results corresponding to the k1 beams include following beam measurement results. If a number of beams with beam measurement results greater than or equal to the first threshold among the beam measurement results corresponding to the m beams is greater than or equal to the first quantity threshold, the beam measurement results corresponding to the k1 beams include: beam measurement results corresponding to first k1 best beams that are greater than or equal to the first threshold among the beam measurement results corresponding to the m beams; or if a number of beams with beam measurement results greater than or equal to the first threshold among the beam measurement results corresponding to the m beams is less than the first quantity threshold, the beam measurement results corresponding to the k1 beams include: all beam measurement results greater than or equal to the first threshold among the beam measurement results corresponding to the m beams, and beam measurement results corresponding to first k3 best beams that are greater than or equal to the first threshold among the beam measurement results corresponding to the n beams, where k1 is equal to the first quantity threshold and k3 is a positive integer.

In some embodiments, the terminal device 300 is further configured to: in a case where a cell-level measurement result associated with the second cell meets a measurement reporting event, send, to the network device, the cell-level measurement result associated with the second cell at a first moment. The cell-level measurement result associated with the second cell is determined by the beam measurement result prediction behavior.

In some embodiments, the measurement configuration information further includes indication information. The indication information is used for indicating whether the terminal device reports, when the measurement reporting event is met, a predicted beam measurement result associated with the second cell at the first moment.

In some embodiments, in a case where the indication information indicates reporting the predicted beam measurement result associated with the second cell at the first moment and the measurement reporting event is met, the terminal device 300 is configured to send, to the network device, the predicted beam measurement result associated with the second cell at the first moment.

In some embodiments, the measurement configuration information further includes one or more of: a second quantity threshold for indicating a maximum number of beams included in a predicted beam measurement result associated with the second cell at the first moment reported by the terminal device; or a first range for indicating a beam identifier range to which beam(s) included in the predicted beam measurement result reported by the terminal device belong.

In some embodiments, if the measurement configuration information further includes the second quantity threshold, in a case where the measurement reporting event is met, a number of beams included in the predicted beam measurement result associated with the second cell at the first moment that is sent by the terminal device to the network device is less than or equal to the second quantity threshold.

In some embodiments, if the measurement configuration information further includes the first range, in a case where the measurement reporting event is met, beams included in the predicted beam measurement result associated with the second cell at the first moment that is sent by the terminal device to the network device belong to the first range.

In some embodiments, the terminal device 300 is further configured to send first capability information to the network device. The first capability information being used for indicating whether the terminal device supports a beam measurement result prediction function.

In some embodiments, the measurement reference signal includes an SSB and/or a CSI-RS.

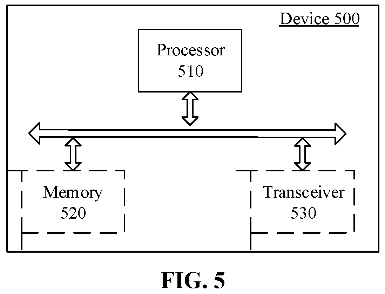

In an optional embodiment, the receiving unit 310 may be a transceiver 530. The terminal device 300 may further include a processor 510 and a memory 520, as shown in FIG. 5.

FIG. 4 is a schematic structural diagram of a network device 400 according to an embodiment of the present disclosure. The network device 400 may include a sending unit 410.

The sending unit 410 is configured to send measurement configuration information to a terminal device. The measurement configuration information includes: frequency point identifier information indicating a first frequency point; and configuration information indicating a configuration associated with the first frequency point. The configuration information is associated with a beam measurement result prediction behavior of the terminal device.

In some embodiments, the configuration information is used for indicating one or more of: cell list information indicating a cell range for the terminal device to perform the beam measurement result prediction behavior at the first frequency point; or beam identifier range information associated with a measurement reference signal. The beam identifier range information indicates a beam range, associated with the measurement reference signal, for the terminal device to perform the beam measurement result prediction behavior at the first frequency point.

In some embodiments, the measurement configuration information further includes: information of a first cell and a first parameter associated with the information of the first cell. Cell(s) included in the cell list information are indicated through the first parameter, and the first parameter is used for indicating whether the terminal device is allowed to perform the beam measurement result prediction behavior on the first cell.

In some embodiments, cell(s) included in the cell list information are indicated through a second parameter. The second parameter is used for indicating PCI information associated with one or more cells on which the terminal device is allowed to perform the beam measurement prediction behavior.

In some embodiments, the beam identifier range information associated with the measurement reference signal is indicated through a third parameter. The third parameter is used for indicating beam identifiers associated with one or more measurement reference signals on which the terminal device is allowed to perform the beam measurement result prediction behavior at the first frequency point.

In some embodiments, cell(s) included in the cell list information and the beam identifier range information associated with the measurement reference signal are indicated through a fourth parameter.

In some embodiments, the measurement configuration information further includes information of a first cell and the fourth parameter associated with the information of the first cel. The fourth parameter is used for indicating: whether the terminal device is allowed to perform the beam measurement result prediction behavior on the first cell; and a beam range associated with a measurement reference signal for performing the beam measurement result prediction behavior for the first cell at the first frequency point.

In some embodiments, the fourth parameter is used for indicating: PCI information of a second cell on which the terminal device is allowed to perform the beam measurement result prediction behavior; and a beam range associated with a measurement reference signal for performing the beam measurement result prediction behavior for the second cell at the first frequency point.

In some embodiments, the network device 400 is further configured to: in a case where a cell-level measurement result associated with the second cell meets a measurement reporting event, receive the cell-level measurement result associated with the second cell at a first moment sent by the terminal device.

The cell-level measurement result associated with the second cell is determined by the beam measurement result prediction behavior.

In some embodiments, the measurement configuration information further includes indication information. The indication information is used for indicating whether the terminal device reports, when the measurement reporting event is met, a predicted beam measurement result associated with the second cell at the first moment.

In some embodiments, in a case where the indication information indicates reporting the predicted beam measurement result associated with the second cell at the first moment and the measurement reporting event is met, the network device is configured to receive, sent by the terminal device, the predicted beam measurement result associated with the second cell at the first moment.

In some embodiments, the measurement configuration information further includes one or more of: a second quantity threshold for indicating a maximum number of beams included in a predicted beam measurement result associated with the second cell at the first moment reported by the terminal device; or a first range for indicating a beam identifier range to which beam(s) included in the predicted beam measurement result reported by the terminal device belong.

In some embodiments, if the measurement configuration information further includes the second quantity threshold, in a case where the measurement reporting event is met, a number of beams included in the predicted beam measurement result associated with the second cell at the first moment sent by the terminal device that is received by the network device is less than or equal to the second quantity threshold.

In some embodiments, if the measurement configuration information further includes the first range, in a case where the measurement reporting event is met, beams included in the predicted beam measurement result associated with the second cell at the first moment sent by the terminal device that is received by the network device belong to the first range.

In some embodiments, the network device 400 is further configured to receive first capability information sent by the terminal device. The first capability information being used for indicating whether the terminal device supports a beam measurement result prediction function.

Optionally, the first capability information may be indicated according to the following granularities: a carrier granularity, a band granularity, a band combined granularity, the band granularity and the band combined granularity, the carrier granularity and the band granularity, the carrier granularity and the band combined granularity, the carrier granularity and the band granularity and the band combined granularity, the frequency range granularity, the band granularity and the frequency range granularity, the carrier granularity and the frequency range granularity, the carrier granularity and the band granularity and the frequency range granularity.

In some embodiments, the measurement reference signal includes an SSB and/or a CSI-RS.

In an optional embodiment, the sending unit 410 may be a transceiver 530. The network device 400 may further include a processor 510 and a memory 520, as shown in FIG. 5.

FIG. 5 is a schematic structural diagram of a device for communication according to an embodiment of the present disclosure. The dashed line in FIG. 5 indicates that the unit or module is optional. The device 500 may be used to implement the method described in the aforementioned method embodiments. The device 500 may be a chip, a terminal device, or a network device.

The device 500 may include one or more processors 510. The processor 510 may support the device 500 to implement the methods described in the aforementioned method embodiments. The processor 510 may be a general-purpose processor or a special-purpose processor. For example, the processor may be a Central Processing Unit (CPU). Alternatively, the processor may also be another general-purpose processor, a Digital Signal Processor (DSP), an Application Specific Integrated Circuit (ASIC), a Field Programmable Gate Array (FPGA) or another programmable logic device, a discrete gate or transistor logic device, a discrete hardware component, or the like. The general-purpose processor may be a microprocessor, any conventional processor, or the like.

The device 500 may also include one or more memories 520. The memory 520 has stored a program that is executable by the processor 510 to cause the processor 510 to perform each of the methods described in the aforementioned method embodiments. The memory 520 may be independent of the processor 510 or may be integrated in the processor 510.

The device 500 may also include a transceiver 530. The processor 510 may communicate with other devices or chips through the transceiver 530. For example, the processor 510 may send and receive data with other devices or chips through the transceiver 530.

An embodiment of the present disclosure further provides a computer-readable storage medium configured to store a program. The computer-readable storage medium may be applied to the terminal or the network device in the embodiments of the present disclosure, and the computer program causes a computer to perform the method performed by the terminal device or the network in various embodiments of the present disclosure.

An embodiment of the present disclosure further provides a computer program product, which includes a computer program. The computer program product may be applied to the terminal or the network device in the embodiments of the present disclosure, and the computer program causes a computer to perform the method performed by the terminal or the network device in various embodiments of the present disclosure.

An embodiment of the present disclosure further provides a computer program. The computer program may be applied to the terminal or the network device in the embodiments of the present disclosure, and the computer program causes a computer to perform the method performed by the terminal or the network device in various embodiments of the present disclosure.

It is to be understood that the terms "system" and "network" are often used interchangeably herein. In addition, the terms used in the embodiments of the present disclosure are used only for explanation of specific embodiments of the present disclosure, and the terms are not intended to limit the present disclosure. The terms "first", "second", "third", "fourth" and the like in the description and claims of the present disclosure and the accompanying drawings are used to distinguish different objects and are not used to describe a particular sequence. Furthermore, the terms "including" and "having" and any variations thereof are intended to cover non-exclusive inclusion.

The "indication" mentioned in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B.

In the embodiments of the present disclosure, the expression "B corresponding to A" means that B is associated with A, and B may be determined based on A. However, it is also to be understood that determining B based on A does not mean that B is determined based on A alone, but that B may also be determined based on A and/or other information.

In the description of the embodiments of the present disclosure, the term "correspond" may mean that there is a direct correspondence or an indirect correspondence between the two, may also mean that there is an association relationship between the two, and may also be a relationship between indication and being indicated, configuration and being configured, etc.

In the embodiments of the present disclosure, the term "predefined" or "preconfigured" may be achieved by pre-storing corresponding codes, tables or other means used for indicating relevant information in devices (e.g., including the terminal devices and the network devices), and the specific implementation thereof is not limited in the present disclosure. For example, predefined may refer to what is defined in the protocol.

In the embodiments of the present disclosure, the "protocol" may be a standard protocol in the communication field. For example, the protocol may include an LTE protocol, an NR protocol, and related protocols applied in future communication systems, which are not limited in the present disclosure.

In the embodiments of the present disclosure, the term "and/or" is only an association relationship describing associated objects and represents that three relationships may exist. For example, A and/or B may represent three conditions: i.e., independent existence of A, existence of both A and B and independent existence of B. In addition, the character "/" in the present disclosure generally indicates that the relationship between the related objects is "or".

In the embodiment of the present disclosure, "including" may refer to directly including or indirectly including. Optionally, "including" mentioned in the embodiments of the present disclosure may be replaced with "indicating" or "used for determining". For example, A includes B, which may be replaced by A indicating B, or A is used for determining B.

In various embodiments of the present disclosure, the sequence number(s) of the above processes do not imply the sequence(s) of execution, and the sequence of execution of each process should be determined according to the functions and internal logic thereof, and should not constitute any limitation on the implementation process of the embodiments of the present disclosure.

In the several embodiments provided in the present disclosure, it is to be understood that the disclosed system, devices, and method may be implemented in other modes. For example, the device embodiments described above are only schematic, and for example, division of the units is only logic function division, and other division manners may be adopted during practical implementation. For example, multiple units or components may be combined or integrated into another system, or some characteristics may be neglected or not executed. In addition, the displayed or discussed mutual couplings or direct couplings or communication connections may be implemented by using some interfaces. The indirect couplings or communication connections between the devices or units may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the solutions of the embodiments of the present disclosure.

In addition, functional units in various embodiments of the disclosure may be integrated into one processing unit, or each of the units may be physically separated, or two or more units may be integrated into one unit.

The aforementioned embodiments may be implemented in whole or in part by software, hardware, firmware or any combination thereof. When implemented in software, the aforementioned embodiments may be implemented in whole or in part in the form of a computer program product. The computer program product includes one or more computer instructions. When the computer program instructions are loaded and executed on a computer, the flows or functions may be generated in whole or in part according to the embodiments of the present disclosure. The computer may be a general-purpose computer, a dedicated computer, a computer network, or other programmable devices. The computer instructions may be stored in a computer-readable storage medium or transmitted from one computer-readable storage medium to another computer-readable storage medium. For example, the computer instructions may be transmitted from one Web site, computer, server, or data center to another Web site, computer, server, or data center in a wired (e.g., coaxial cable, optical fiber, Digital Subscriber Line (DSL)) manner or a wireless (e.g., infrared, wireless, microwave, etc.) manner. The computer-readable storage medium may be any available medium that a computer may access or may be a data storage device such as a server, a data center, or the like that is integrated with one or more available media. The available medium may be a magnetic medium (e.g., floppy disk, hard disk, magnetic tape), an optical medium (e.g., Digital Video Disc (DVD)), or a semiconductor medium (e.g., Solid State Disk (SSD)), etc.

The above descriptions are merely specific implementations of the disclosure, but are not intended to limit the scope of protection of the disclosure. Any variation or replacement readily figured out by a person skilled in the art within the technical scope disclosed in the disclosure shall fall within the scope of protection of the disclosure. Therefore, the scope of protection of the disclosure is defined by the scope of protection of the claims.

## Claims

1. A method for wireless communication, comprising:
receiving, by a terminal device, measurement configuration information sent by a network device,
wherein the measurement configuration information comprises:
frequency point identifier information indicating a first frequency point; and
configuration information indicating a configuration associated with the first frequency point, the configuration information being associated with a beam measurement result prediction behavior of the terminal device.

2. The method of claim 1, wherein the configuration information is used for indicating one or more of:
cell list information indicating a cell range for the terminal device to perform the beam measurement result prediction behavior at the first frequency point; or
beam identifier range information associated with a measurement reference signal, the beam identifier range information indicating a beam range, associated with the measurement reference signal, for the terminal device to perform the beam measurement result prediction behavior at the first frequency point.

3. The method of claim 2, wherein the measurement configuration information further comprises: information of a first cell and a first parameter associated with the information of the first cell, wherein
cell(s) comprised in the cell list information are indicated through the first parameter, and the first parameter is used for indicating whether the terminal device is allowed to perform the beam measurement result prediction behavior on the first cell.

4. The method of claim 2, wherein cell(s) comprised in the cell list information are indicated through a second parameter, the second parameter being used for indicating Physical Cell Identity (PCI) information associated with one or more cells on which the terminal device is allowed to perform the beam measurement prediction behavior.

5. The method of any one of claims 2 to 4, wherein the beam identifier range information associated with the measurement reference signal is indicated through a third parameter, the third parameter being used for indicating beam identifiers associated with one or more measurement reference signals on which the terminal device is allowed to perform the beam measurement result prediction behavior at the first frequency point.

6. The method of claim 2, wherein cell(s) comprised in the cell list information and the beam identifier range information associated with the measurement reference signal are indicated through a fourth parameter.

7. The method of claim 6, wherein the measurement configuration information further comprises information of a first cell and the fourth parameter associated with the information of the first cell, wherein the fourth parameter being used for indicating:
whether the terminal device is allowed to perform the beam measurement result prediction behavior on the first cell; and
a beam range associated with a measurement reference signal for performing the beam measurement result prediction behavior for the first cell at the first frequency point.

8. The method of claim 6, wherein the fourth parameter is used for indicating:
Physical Cell Identity (PCI) information of a second cell on which the terminal device is allowed to perform the beam measurement result prediction behavior; and
a beam range associated with a measurement reference signal for performing the beam measurement result prediction behavior for the second cell at the first frequency point.

9. The method of any one of claims 1 to 8, further comprising:
obtaining, by the terminal device, a beam measurement result corresponding to a second beam set through prediction based on a beam measurement result corresponding to a first beam set obtained through an actual measurement procedure,
wherein both the beam measurement result corresponding to the first beam set and the beam measurement result corresponding to the second beam set are associated with a second cell on which the terminal device is allowed to perform the beam measurement result prediction behavior at the first frequency point.

10. The method of claim 9, wherein the beam measurement result corresponding to the first beam set is beam measurement results corresponding to m beams associated with a first moment obtained by the terminal device through the actual measurement procedure, and obtaining, by the terminal device, the beam measurement result corresponding to the second beam set through prediction based on the beam measurement result corresponding to the first beam set obtained through the actual measurement procedure comprises:
obtaining, by the terminal device, beam measurement results corresponding to n beams associated with the first moment and identifiers of the n beams through prediction based on the beam measurement results corresponding to the m beams and identifiers of the m beams,
wherein the beam measurement results corresponding to the n beams comprise the beam measurement result corresponding to the second beam set, and the beam measurement results corresponding to the m beams and the beam measurement results corresponding to the n beams are both associated with the second cell, where both m and n are positive integers.

11. The method of claim 9, wherein the beam measurement result corresponding to the first beam set is beam measurement results corresponding to k beam sets associated with k moments before a first moment obtained by the terminal device through the actual measurement procedure, and obtaining, by the terminal device, the beam measurement result corresponding to the second beam set through prediction based on the beam measurement result corresponding to the first beam set obtained by the actual measurement procedure comprises:
obtaining, by the terminal device, beam measurement results corresponding to n beams associated with the first moment and identifiers of the n beams through prediction based on the beam measurement results corresponding to the k beam sets and identifiers corresponding to the k beam sets,
wherein the beam measurement results corresponding to the n beams comprise the beam measurement results corresponding to the second beam set, the beam measurement results corresponding to the k beam sets and the beam measurement results corresponding to the n beams are both associated with the second cell, where both k and n are positive integers.

12. The method of any one of claims 9 to 11, further comprising:
determining, by the terminal device, a cell-level measurement result associated with the second cell based on a beam measurement result corresponding to a third beam set and/or the beam measurement result corresponding to the second beam set,
wherein the beam measurement result corresponding to the third beam set belongs to beam measurement results corresponding to m beams associated with the second cell at a first moment obtained by the terminal device through the actual measurement procedure.

13. The method of claim 12, wherein in a case where all of the beam measurement results corresponding to the m beams are less than a first threshold, the cell-level measurement result associated with the second cell at the first moment is determined based on a maximum value among the beam measurement results corresponding to the m beams, where m is a positive integer.

14. The method of claim 12 or 13, wherein the beam measurement result corresponding to the second beam set belongs to beam measurement results corresponding to n beams associated with the second cell at the first moment obtained by the terminal device through a prediction procedure, and
in a case where one or more beam measurement results among the beam measurement results corresponding to the m beams are greater than or equal to a first threshold, the cell-level measurement result associated with the second cell at the first moment is determined based on a linear average of beam measurement results corresponding to k1 beams,
wherein the beam measurement results corresponding to the k1 beams are all greater than or equal to the first threshold, and any one of the beam measurement results corresponding to the k1 beams belong to the beam measurement results corresponding to the m beams or the beam measurement results corresponding to the n beams, where m, n and k1 are all positive integers.

15. The method of claim 14, wherein a number of beam measurement results greater than or equal to the first threshold among the beam measurement results corresponding to the m beams is a first number, and a number of beam measurement results greater than or equal to the first threshold among the beam measurement results corresponding to the n beams is a second number, wherein
a sum of the first number and the second number is a third number, and the cell-level measurement result associated with the second cell at the first moment is associated with the third number.

16. The method of claim 15, wherein in a case where the third number is less than or equal to a first quantity threshold, the beam measurement results corresponding to the k1 beams comprise: beam measurement results greater than or equal to the first threshold in a total of the beam measurement results corresponding to the m beams and the beam measurement results corresponding to the n beams.

17. The method of claim 15 or 16, wherein in a case where the third number is greater than a first quantity threshold, the beam measurement results corresponding to the k1 beams comprise:, beam measurement results corresponding to first k2 best beams that are greater than or equal to the first threshold in a total of the beam measurement results corresponding to the m beams and the beam measurement results corresponding to the n beams, where k1 or k2 is equal to the first quantity threshold.

18. The method of claim 15 or 16, wherein in a case where the third number is greater than a first quantity threshold, the beam measurement results corresponding to the k1 beams comprise:
if a number of beams with beam measurement results greater than or equal to the first threshold among the beam measurement results corresponding to the m beams is greater than or equal to the first quantity threshold, the beam measurement results corresponding to the k1 beams comprise: beam measurement results corresponding to first k1 best beams that are greater than or equal to the first threshold among the beam measurement results corresponding to the m beams; or
if a number of beams with beam measurement results greater than or equal to the first threshold among the beam measurement results corresponding to the m beams is less than the first quantity threshold, the beam measurement results corresponding to the k1 beams comprise: all beam measurement results greater than or equal to the first threshold among the beam measurement results corresponding to the m beams, and beam measurement results corresponding to first k3 best beams that are greater than or equal to the first threshold among the beam measurement results corresponding to the n beams, where k1 is equal to the first quantity threshold and k3 is a positive integer.

19. The method of any one of claims 1 to 18, further comprising:
in a case where a cell-level measurement result associated with the second cell meets a measurement reporting event, sending, by the terminal device, to the network device, the cell-level measurement result associated with the second cell at a first moment,
wherein the cell-level measurement result associated with the second cell is determined by the beam measurement result prediction behavior.

20. The method of claim 19, wherein the measurement configuration information further comprises indication information, the indication information being used for indicating whether the terminal device reports, when the measurement reporting event is met, a predicted beam measurement result associated with the second cell at the first moment.

21. The method of claim 20, wherein in a case where the indication information indicates reporting the predicted beam measurement result associated with the second cell at the first moment and the measurement reporting event is met, the predicted beam measurement result associated with the second cell at the first moment is sent by the terminal device to the network device.

22. The method of any one of claims 19 to 21, wherein the measurement configuration information further comprises one or more of:
a second quantity threshold for indicating a maximum number of beams comprised in a predicted beam measurement result associated with the second cell at the first moment reported by the terminal device; or
a first range for indicating a beam identifier range to which beam(s) comprised in the predicted beam measurement result reported by the terminal device belong.

23. The method of claim 22, wherein if the measurement configuration information further comprises the second quantity threshold, in a case where the measurement reporting event is met, a number of beams comprised in the predicted beam measurement result associated with the second cell at the first moment that is sent by the terminal device to the network device is less than or equal to the second quantity threshold.

24. The method of claim 22 or 23, wherein if the measurement configuration information further comprises the first range, in a case where the measurement reporting event is met, beams comprised in the predicted beam measurement result associated with the second cell at the first moment that is sent by the terminal device to the network device belong to the first range.

25. The method of any one of claims 1 to 24, further comprising:
sending, by the terminal device, first capability information to the network device, the first capability information being used for indicating whether the terminal device supports a beam measurement result prediction function.

26. The method of any one of claims 1 to 25, wherein a measurement reference signal comprises a Synchronization Signal Block (SSB), and/or a Channel State Information Reference Signal (CSI-RS).

27. A method for wireless communication, comprising:
sending, by a network device, measurement configuration information to a terminal device,
wherein the measurement configuration information comprises:
frequency point identifier information indicating a first frequency point; and
configuration information indicating a configuration associated with the first frequency point, the configuration information being associated with a beam measurement result prediction behavior of the terminal device.

28. The method of claim 27, wherein the configuration information is used for indicating one or more of:
cell list information indicating a cell range for the terminal device to perform the beam measurement result prediction behavior at the first frequency point; or
beam identifier range information associated with a measurement reference signal, the beam identifier range information indicating a beam range, associated with the measurement reference signal, for the terminal device to perform the beam measurement result prediction behavior at the first frequency point.

29. The method of claim 28, wherein the measurement configuration information further comprises: information of a first cell and a first parameter associated with the information of the first cell, wherein cell(s) comprised in the cell list information are indicated through the first parameter, and the first parameter is used for indicating whether the terminal device is allowed to perform the beam measurement result prediction behavior on the first cell.

30. The method of claim 28, wherein cell(s) comprised in the cell list information are indicated through a second parameter, the second parameter being used for indicating Physical Cell Identity (PCI) information associated with one or more cells on which the terminal device is allowed to perform the beam measurement prediction behavior.

31. The method of any one of claims 28 to 30, wherein the beam identifier range information associated with the measurement reference signal is indicated through a third parameter, the third parameter being used for indicating beam identifiers associated with one or more measurement reference signals on which the terminal device is allowed to perform the beam measurement result prediction behavior at the first frequency point.

32. The method of claim 28, wherein cell(s) comprised in the cell list information and the beam identifier range information associated with the measurement reference signal are indicated through a fourth parameter.

33. The method of claim 32, wherein the measurement configuration information further comprises information of a first cell and the fourth parameter associated with the information of the first cell, wherein the fourth parameter being used for indicating: whether the terminal device is allowed to perform the beam measurement result prediction behavior on the first cell; and a beam range associated with a measurement reference signal for performing the beam measurement result prediction behavior for the first cell at the first frequency point.

34. The method of claim 32, wherein the fourth parameter is used for indicating: Physical Cell Identity (PCI) information of a second cell on which the terminal device is allowed to perform the beam measurement result prediction behavior; and a beam range associated with a measurement reference signal for performing the beam measurement result prediction behavior for the second cell at the first frequency point.

35. The method of any one of claims 27 to 34, further comprising:
in a case where a cell-level measurement result associated with the second cell meets a measurement reporting event, receiving, by the network device, the cell-level measurement result associated with the second cell at a first moment sent by the terminal device,
wherein the cell-level measurement result associated with the second cell is determined by the beam measurement result prediction behavior.

36. The method of claim 35, wherein the measurement configuration information further comprises indication information, the indication information being used for indicating whether the terminal device reports, when the measurement reporting event is met, a predicted beam measurement result associated with the second cell at the first moment.

37. The method of claim 36, wherein in a case where the indication information indicates reporting the predicted beam measurement result associated with the second cell at the first moment and the measurement reporting event is met, the predicted beam measurement result associated with the second cell at the first moment sent by the the terminal device is received by the network device.

38. The method of any one of claims 35 to 37, wherein the measurement configuration information further comprises one or more of:
a second quantity threshold for indicating a maximum number of beams comprised in a predicted beam measurement result associated with the second cell at the first moment reported by the terminal device; or
a first range for indicating a beam identifier range to which beam(s) comprised in the predicted beam measurement result reported by the terminal device belong.

39. The method of claim 38, wherein if the measurement configuration information further comprises the second quantity threshold, in a case where the measurement reporting event is met, a number of beams comprised in the predicted beam measurement result associated with the second cell at the first moment sent by the terminal device that is received by the network device is less than or equal to the second quantity threshold.

40. The method of claim 38 or 39, wherein if the measurement configuration information further comprises the first range, in a case where the measurement reporting event is met, beams comprised in the predicted beam measurement result associated with the second cell at the first moment sent by the terminal device that is received by the network device belong to the first range.

41. The method of any one of claims 27 to 40, further comprising:
receiving, by the network device, first capability information sent by the terminal device, the first capability information being used for indicating whether the terminal device supports a beam measurement result prediction function.

42. The method of any one of claims 27 to 41, wherein a measurement reference signal comprises a Synchronization Signal Block (SSB), and/or a Channel State Information Reference Signal (CSI-RS).

43. A terminal device, comprising:
a receiving unit, configured to receive measurement configuration information sent by a network device,
wherein the measurement configuration information comprises:
frequency point identifier information indicating a first frequency point; and
configuration information indicating a configuration associated with the first frequency point, the configuration information being associated with a beam measurement result prediction behavior of the terminal device.

44. The terminal device of claim 43, wherein the configuration information is used for indicating one or more of:
cell list information indicating a cell range for the terminal device to perform the beam measurement result prediction behavior at the first frequency point; or
beam identifier range information associated with a measurement reference signal, the beam identifier range information indicating a beam range, associated with the measurement reference signal, for the terminal device to perform the beam measurement result prediction behavior at the first frequency point.

45. The terminal device of claim 44, wherein the measurement configuration information further comprises: information of a first cell and a first parameter associated with the information of the first cell, wherein cell(s) comprised in the cell list information are indicated through the first parameter, and the first parameter is used for indicating whether the terminal device is allowed to perform the beam measurement result prediction behavior on the first cell.

46. The terminal device of claim 44, wherein cell(s) comprised in the cell list information are indicated through a second parameter, the second parameter being used for indicating Physical Cell Identity (PCI) information associated with one or more cells on which the terminal device is allowed to perform the beam measurement prediction behavior.

47. The terminal device of any one of claims 44 to 46, wherein the beam identifier range information associated with the measurement reference signal is indicated through a third parameter, the third parameter being used for indicating beam identifiers associated with one or more measurement reference signals on which the terminal device is allowed to perform the beam measurement result prediction behavior at the first frequency point.

48. The terminal device of claim 44, wherein cell(s) comprised in the cell list information and the beam identifier range information associated with the measurement reference signal are indicated through a fourth parameter.

49. The terminal device of claim 48, wherein the measurement configuration information further comprises information of a first cell and the fourth parameter associated with the information of the first cell, wherein the fourth parameter being used for indicating: whether the terminal device is allowed to perform the beam measurement result prediction behavior on the first cell; and a beam range associated with a measurement reference signal for performing the beam measurement result prediction behavior for the first cell at the first frequency point.

50. The terminal device of claim 48, wherein the fourth parameter is used for indicating: Physical Cell Identity (PCI) information of a second cell on which the terminal device is allowed to perform the beam measurement result prediction behavior; and a beam range associated with a measurement reference signal for performing the beam measurement result prediction behavior for the second cell at the first frequency point.

51. The terminal device of any one of claims 43 to 50, wherein the terminal device is further configured to:
obtain a beam measurement result corresponding to a second beam set through prediction based on a beam measurement result corresponding to a first beam set obtained through an actual measurement procedure,
wherein both the beam measurement result corresponding to the first beam set and the beam measurement result corresponding to the second beam set are associated with a second cell on which the terminal device is allowed to perform the beam measurement result prediction behavior at the first frequency point.

52. The terminal device of claim 51, wherein the beam measurement result corresponding to the first beam set is beam measurement results corresponding to m beams associated with a first moment obtained by the terminal device through the actual measurement procedure, and obtaining the beam measurement result corresponding to the second beam set through prediction based on the beam measurement result corresponding to the first beam set obtained through the actual measurement procedure comprises:
obtaining beam measurement results corresponding to n beams associated with the first moment and identifiers of the n beams through prediction based on the beam measurement results corresponding to the m beams and identifiers of the m beams,
wherein the beam measurement results corresponding to the n beams comprise the beam measurement result corresponding to the second beam set, and the beam measurement results corresponding to the m beams and the beam measurement results corresponding to the n beams are both associated with the second cell, where both m and n are positive integers.

53. The terminal device of claim 51, wherein the beam measurement result corresponding to the first beam set is beam measurement results corresponding to k beam sets associated with k moments before a first moment obtained by the terminal device through the actual measurement procedure, and obtaining the beam measurement result corresponding to the second beam set through prediction based on the beam measurement result corresponding to the first beam set obtained by the actual measurement procedure comprises:
obtaining beam measurement results corresponding to n beams associated with the first moment and identifiers of the n beams through prediction based on the beam measurement results corresponding to the k beam sets and identifiers corresponding to the k beam sets,
wherein the beam measurement results corresponding to the n beams comprise the beam measurement results corresponding to the second beam set, the beam measurement results corresponding to the k beam sets and the beam measurement results corresponding to the n beams are both associated with the second cell, where both k and n are positive integers.

54. The terminal device of any one of claims 51 to 53, wherein the terminal device is further configured to:
determine a cell-level measurement result associated with the second cell based on a beam measurement result corresponding to a third beam set and/or the beam measurement result corresponding to the second beam set, wherein the beam measurement result corresponding to the third beam set belongs to beam measurement results corresponding to m beams associated with the second cell at a first moment obtained by the terminal device through the actual measurement procedure.

55. The terminal device of claim 54, wherein in a case where all of the beam measurement results corresponding to the m beams are less than a first threshold, the cell-level measurement result associated with the second cell at the first moment is determined based on a maximum value among the beam measurement results corresponding to the m beams, where m is a positive integer.

56. The terminal device of claim 54 or 55, wherein the beam measurement result corresponding to the second beam set belongs to beam measurement results corresponding to n beams associated with the second cell at the first moment obtained by the terminal device through a prediction procedure, and in a case where one or more beam measurement results among the beam measurement results corresponding to the m beams are greater than or equal to a first threshold, the cell-level measurement result associated with the second cell at the first moment is determined based on a linear average of beam measurement results corresponding to k1 beams, wherein the beam measurement results corresponding to the k1 beams are all greater than or equal to the first threshold, and any one of the beam measurement results corresponding to the k1 beams belong to the beam measurement results corresponding to the m beams or the beam measurement results corresponding to the n beams, where m, n and k1 are all positive integers.

57. The terminal device of claim 56, wherein a number of beam measurement results greater than or equal to the first threshold among the beam measurement results corresponding to the m beams is a first number, and a number of beam measurement results greater than or equal to the first threshold among the beam measurement results corresponding to the n beams is a second number, wherein a sum of the first number and the second number is a third number, and the cell-level measurement result associated with the second cell at the first moment is associated with the third number.

58. The terminal device of claim 57, wherein in a case where the third number is less than or equal to a first quantity threshold, the beam measurement results corresponding to the k1 beams comprise: beam measurement results greater than or equal to the first threshold in a total of the beam measurement results corresponding to the m beams and the beam measurement results corresponding to the n beams.

59. The terminal device of claim 57 or 58, wherein in a case where the third number is greater than a first quantity threshold, the beam measurement results corresponding to the k1 beams comprise:, beam measurement results corresponding to first k2 best beams that are greater than or equal to the first threshold in a total of the beam measurement results corresponding to the m beams and the beam measurement results corresponding to the n beams, where k1 or k2 is equal to the first quantity threshold.

60. The terminal device of claim 57 or 58, wherein in a case where the third number is greater than a first quantity threshold, the beam measurement results corresponding to the k1 beams comprise:
if a number of beams with beam measurement results greater than or equal to the first threshold among the beam measurement results corresponding to the m beams is greater than or equal to the first quantity threshold, the beam measurement results corresponding to the k1 beams comprise: beam measurement results corresponding to first k1 best beams that are greater than or equal to the first threshold among the beam measurement results corresponding to the m beams; or
if a number of beams with beam measurement results greater than or equal to the first threshold among the beam measurement results corresponding to the m beams is less than the first quantity threshold, the beam measurement results corresponding to the k1 beams comprise: all beam measurement results greater than or equal to the first threshold among the beam measurement results corresponding to the m beams, and beam measurement results corresponding to first k3 best beams that are greater than or equal to the first threshold among the beam measurement results corresponding to the n beams, where k1 is equal to the first quantity threshold and k3 is a positive integer.

61. The terminal device of any one of claims 43 to 60, wherein the terminal device is further configured to:
in a case where a cell-level measurement result associated with the second cell meets a measurement reporting event, send, to the network device, the cell-level measurement result associated with the second cell at a first moment,
wherein the cell-level measurement result associated with the second cell is determined by the beam measurement result prediction behavior.

62. The terminal device of claim 61, wherein the measurement configuration information further comprises indication information, the indication information being used for indicating whether the terminal device reports, when the measurement reporting event is met, a predicted beam measurement result associated with the second cell at the first moment.

63. The terminal device of claim 62, wherein in a case where the indication information indicates reporting the predicted beam measurement result associated with the second cell at the first moment and the measurement reporting event is met, the predicted beam measurement result associated with the second cell at the first moment is sent by the terminal device to the network device.

64. The terminal device of any one of claims 61 to 63, wherein the measurement configuration information further comprises one or more of:
a second quantity threshold for indicating a maximum number of beams comprised in a predicted beam measurement result associated with the second cell at the first moment reported by the terminal device; or
a first range for indicating a beam identifier range to which beam(s) comprised in the predicted beam measurement result reported by the terminal device belong.

65. The terminal device of claim 64, wherein if the measurement configuration information further comprises the second quantity threshold, in a case where the measurement reporting event is met, a number of beams comprised in the predicted beam measurement result associated with the second cell at the first moment that is sent by the terminal device to the network device is less than or equal to the second quantity threshold.

66. The terminal device of claim 64 or 65, wherein if the measurement configuration information further comprises the first range, in a case where the measurement reporting event is met, beams comprised in the predicted beam measurement result associated with the second cell at the first moment that is sent by the terminal device to the network device belong to the first range.

67. The terminal device of any one of claims 43 to 66, wherein the terminal device is further configured to:
send first capability information to the network device,
the first capability information being used for indicating whether the terminal device supports a beam measurement result prediction function.

68. The terminal device of any one of claims 43 to 67, wherein a measurement reference signal comprises a Synchronization Signal Block (SSB), and/or a Channel State Information Reference Signal (CSI-RS).

69. A network device, comprising:
a sending unit, configured to send measurement configuration information to a terminal device,
wherein the measurement configuration information comprises:
frequency point identifier information indicating a first frequency point; and
configuration information indicating a configuration associated with the first frequency point, the configuration information being associated with a beam measurement result prediction behavior of the terminal device.

70. The network device of claim 69, wherein the configuration information is used for indicating one or more of:
cell list information indicating a cell range for the terminal device to perform the beam measurement result prediction behavior at the first frequency point; or
beam identifier range information associated with a measurement reference signal, the beam identifier range information indicating a beam range, associated with the measurement reference signal, for the terminal device to perform the beam measurement result prediction behavior at the first frequency point.

71. The network device of claim 70, wherein the measurement configuration information further comprises: information of a first cell and a first parameter associated with the information of the first cell, wherein cell(s) comprised in the cell list information are indicated through the first parameter, and the first parameter is used for indicating whether the terminal device is allowed to perform the beam measurement result prediction behavior on the first cell.

72. The network device of claim 70, wherein cell(s) comprised in the cell list information are indicated through a second parameter, the second parameter being used for indicating Physical Cell Identity (PCI) information associated with one or more cells on which the terminal device is allowed to perform the beam measurement prediction behavior.

73. The network device of any one of claims 70 to 72, wherein the beam identifier range information associated with the measurement reference signal is indicated through a third parameter, the third parameter being used for indicating beam identifiers associated with one or more measurement reference signals on which the terminal device is allowed to perform the beam measurement result prediction behavior at the first frequency point.

74. The network device of claim 70, wherein cell(s) comprised in the cell list information and the beam identifier range information associated with the measurement reference signal are indicated through a fourth parameter.

75. The network device of claim 74, wherein the measurement configuration information further comprises information of a first cell and the fourth parameter associated with the information of the first cell, wherein the fourth parameter being used for indicating: whether the terminal device is allowed to perform the beam measurement result prediction behavior on the first cell; and a beam range associated with a measurement reference signal for performing the beam measurement result prediction behavior for the first cell at the first frequency point.

76. The network device of claim 74, wherein the fourth parameter is used for indicating: Physical Cell Identity (PCI) information of a second cell on which the terminal device is allowed to perform the beam measurement result prediction behavior; and a beam range associated with a measurement reference signal for performing the beam measurement result prediction behavior for the second cell at the first frequency point.

77. The network device of any one of claims 69 to 76, wherein the network device is further configured to:
in a case where a cell-level measurement result associated with the second cell meets a measurement reporting event, receive the cell-level measurement result associated with the second cell at a first moment sent by the terminal device,
wherein the cell-level measurement result associated with the second cell is determined by the beam measurement result prediction behavior.

78. The network device of claim 77, wherein the measurement configuration information further comprises indication information, the indication information being used for indicating whether the terminal device reports, when the measurement reporting event is met, a predicted beam measurement result associated with the second cell at the first moment.

79. The network device of claim 78, wherein in a case where the indication information indicates reporting the predicted beam measurement result associated with the second cell at the first moment and the measurement reporting event is met, the predicted beam measurement result associated with the second cell at the first moment sent by the the terminal device is received by the network device.

80. The network device of any one of claims 77 to 79, wherein the measurement configuration information further comprises one or more of:
a second quantity threshold for indicating a maximum number of beams comprised in a predicted beam measurement result associated with the second cell at the first moment reported by the terminal device; or
a first range for indicating a beam identifier range to which beam(s) comprised in the predicted beam measurement result reported by the terminal device belong.

81. The network device of claim 80, wherein if the measurement configuration information further comprises the second quantity threshold, in a case where the measurement reporting event is met, a number of beams comprised in the predicted beam measurement result associated with the second cell at the first moment sent by the terminal device that is received by the network device is less than or equal to the second quantity threshold.

82. The network device of claim 80 or 81, wherein if the measurement configuration information further comprises the first range, in a case where the measurement reporting event is met, beams comprised in the predicted beam measurement result associated with the second cell at the first moment sent by the terminal device that is received by the network device belong to the first range.

83. The network device of any one of claims 69 to 82, wherein the network device is further configured to:
receive first capability information sent by the terminal device,
the first capability information being used for indicating whether the terminal device supports a beam measurement result prediction function.

84. The network device of any one of claims 69 to 83, wherein a measurement reference signal comprises a Synchronization Signal Block (SSB), and/or a Channel State Information Reference Signal (CSI-RS).

85. A terminal device, comprising a memory and a processor, wherein the memory is configured to store a program, and the processor is configured to invoke the program in the memory, to enable the terminal device to perform the method of any one of claims 1 to 26.

86. A network device, comprising a memory and a processor, wherein the memory is configured to store a program, and the processor is configured to invoke the program in the memory, to enable the network device to perform the method of any one of claims 27 to 42.

87. A device, comprising a processor configured to invoke a program from a memory, to enable the device to perform the method of any one of claims 1 to 42.

88. A chip, comprising a processor configured to invoke a program from a memory, to enable a device on which the chip is mounted to perform the method of any one of claims 1 to 42.

89. A computer-readable storage medium having stored thereon a program that causes a computer to perform the method of any one of claims 1 to 42.

90. A computer program product comprising a program that causes a computer to perform the method of any one of claims 1 to 42.

91. A computer program that causes a computer to perform the method of any one of claims 1 to 42.
